# EUROPÄISCHE PATENTSCHRIFT

(11) **EP 2 339 203 B1**
(45) Veröffentlichungstag und Bekanntmachung des Hinweises auf die Patenterteilung: **10.03.2021**
(21) Anmeldenummer: 10015993.8
(22) Anmeldetag: 23.12.2010
(51) Int. Cl.: F16F 9/53, H01F 7/02

(54) **DÄMPFEREINRICHTUNG FÜR EIN ZWEIRAD**
DAMPING DEVICE FOR A TWO-WHEELER
DISPOSITIF D'AMORTISSEMENT POUR UN DEUX-ROUES

(30) Priorität: 23.12.2009 DE 102009060550
(43) Veröffentlichungstag der Anmeldung: 29.06.2011
(73) Patentinhaber: DT Swiss AG, 2504 Biel/Bienne (CH)
(72) Erfinder: Walthert, Martin, 3270 Aarberg (CH); Battlogg, Stefan, 6771 St. Anton i.M. (AT); Elsensohn, Gernot, 6771 St. Anton i.M. (AT)
(74) Vertreter: BSB Patentanwälte Schütte & Engelen Partnerschaft mbB

(56) Entgegenhaltungen:
- EP-A1- 2 394 068
- EP-A1- 2 456 999
- EP-A2- 1 402 197
- WO-A2-99/27273
- DE-A1- 4 433 056
- DE-A1-102006 037 992
- US-A1- 2004 154 887

## Beschreibung

Die vorliegende Erfindung betrifft eine Dämpfereinrichtung für ein Zweirad und insbesondere ein Fahrrad, wobei das Fahrrad auch mit einem Hilfsantrieb ausgerüstet sein kann. Die Dämpfereinrichtung kann beispielsweise als Hinterraddämpfer dienen oder Bestandteil einer Federgabel sein oder als eine solche ausgebildet sein.

Im Stand der Technik sind verschiedenste Hinterraddämpfer und Federgabeln für Fahrräder bekannt geworden. Typischerweise umfasst eine Dämpfungseinheit für ein Hinterrad eines Fahrrades wenigstens eine Feder, um auftretende Stöße abzufedern, sowie einen Dämpfer, um die Federschwingung zu dämpfen.

Dämpfer für Fahrräder werden zumeist mit einem Dämpfungsfluid, wie beispielsweise Öl, betrieben. Zur Dämpfung wird das Dämpfungsfluid von einer ersten Dämpfungskammer über eine Blende gedrosselt zu einer zweiten Dämpfungskammer geleitet. Die Größe der Öffnung der Blende bestimmt die Stärke der Dämpfung. Dabei ist es bei der Anwendung an Fahrrädern gewünscht, die Stärke der Dämpfung lastabhängig einzustellen. So können beispielsweise kleinere Stöße weniger stark gedämpft werden als starke Stöße.

Die optimale Dämpfung hängt auch von den Eigenschaften des Geländes ab. Bei Fahrten über eine Straße, über einen Waldweg oder direkt durch das Gelände sind jeweils unterschiedliche Dämpfungseinstellungen optimal.

Zur Einstellung und Beeinflussung der Dämpfung sind magnetorheologische Fluide bekannt geworden, deren Eigenschaften durch Anlegen eines magnetischen Feldes beeinflusst werden können. Magnetorheologische Fluide bestehen meist aus einer Suspension von kleinen, magnetisch polarisierbaren Partikeln, welche in einer Trägerflüssigkeit fein verteilt sind. Die meist aus Carbonyleisenpulver bestehenden polarisierbaren Partikel weisen typischerweise Durchmesser zwischen 0,1 und 50 Mikrometern auf und bilden unter Einfluss eines magnetischen Feldes kettenartige Strukturen, sodass die Viskosität des magnetorheologischen Fluids unter Einfluss eines Magnetfelds insbesondere senkrecht zu den Feldlinien des Magnetfeldes erheblich zunimmt.

Bei Abschaltung des Magnetfelds nimmt die Viskosität nahezu schlagartig wieder ab. Untersuchungen haben gezeigt, dass die typische Reaktionszeit im Bereich weniger Millisekunden oder sogar darunter liegt. Somit eignen sich magnetorheologische Fluide zum Einsatz an Dämpfern von Fahrrädern.

Mit der US 6,471,018 B1 ist ein magnetorheologischer Dämpfer bekannt geworden, bei dem über einen Elektromagneten eine Strömungspassage zwischen der ersten und der zweiten Dämpferkammer mit einem Magnetfeld beaufschlagt wird, um die gewünschte Dämpfung einzustellen. Ein Vorteil eines solches Dämpfers ist, dass die Verkettung der magnetorheologischen Partikel über die Stärke des Magnetfeldes gesteuert werden kann. Die Stärke eines Elektromagneten kann einfach eingestellt werden, sodass ein flexibles System vorliegt. Nachteilig ist bei dem bekannten System insbesondere bei dem Einsatz an Fahrrädern allerdings, dass über den gesamten Betriebszeitraum der Elektromagnet mit elektrischer Energie versorgt werden muss, um die gewünschten Dämpfungseigenschaften zu gewährleisten. Insbesondere bei dem Einsatz an Fahrrädern ist der konstante Strombedarf nachteilig, da bei handelsüblichen Batterien entweder die Betriebszeit kurz oder das Mehrgewicht der Stromversorgung hoch wird.

Zur Reduktion der benötigen elektrischen Energie ist es deshalb bekannt geworden, einen Permanentmagneten in Kombination mit einem Elektromagneten einzusetzen, wobei der Permanentmagnet eine gewünschte Grundstärke des magnetischen Feldes erzeugt, welche durch den Elektromagneten in gewünschter Art und Weise moduliert wird. So kann bei geeigneter Schaltung des Elektromagneten das im magnetorheologischen Arbeitsspalt wirkende Magnetfeld verstärkt oder auch geschwächt werden, solange der Elektromagnet betrieben wird. Dieses System benötigt aber dennoch bei jeder von der Grundstellung abweichenden Einstellung ständig elektrische Energie, sodass auch hier der Einsatzbereich an dem Fahrrad eingeschränkt ist. Je weiter der gewählte Betriebspunkt von der durch den Permanentmagnet fix vorgegebenen Grundstellung abweicht, desto größer wird der Energiebedarf.

Die DE 44 33 056 A1 offenbart einen solchen Schwingungsdämpfer für Kraftfahrzeuge, wobei der Schwingungsdämpfer einen Arbeitszylinder, einen den Arbeitszylinder in zwei Arbeitskammern unterteilenden, an einer Kolbenstange befestigten Arbeitskolben, einen Ausgleichsraum und eine die Kolbenstange gegen die Atmosphäre abdichtende Kolbenstangenführung umfasst. Dabei sind die Arbeitsräume mit einem magnetorheologischen und durch eine elektrische Spule beaufschlagten Fluid gefüllt. Das magnetorheologische Fluid wird dabei über ein Dauermagnetfeld beaufschlagt. Es ist eine elektrische Spule umfasst, um das Dauermagnetfeld des Permanentmagneten über ein Magnetfeld der elektrischen Spule zu kompensieren oder zu verstärken.

Die DE 10 2006 037 992 A1 offenbart ein Bauteil mit Haltefunktion, umfassend wenigstens ein erstes und wenigstens ein zweites Element, die zueinander beweglich angeordnet sind, wenigstens eine magnetisierbare Komponente mit remanenten Eigenschaften, ein magnetorheologisches Fluid oder Magnetpulver, das sich in dem Magnetfeld der wenigstens einen magnetisierbaren Komponente befindet, wenn diese magnetisiert ist, und über das die beiden Elemente in Wirkverbindung gebracht werden können, und eine Spule, die derart angeordnet ist, dass sie bei Bestromung ein zur Magnetisierung der wenigstens einen magnetisierbaren Komponente ausreichendes Magnetfeld erzeugen kann. Die Spule un die wenigstens eine magnetisierbare Komponente sind derart angeordnet, dass ein erster stromloser Zustand erzeugt werden kann, in dem die magnetisierbare Komponente nach ihrer Magnetisierung ein Magnetfeld bereitstem, das zur Aufrechterhaltung der Wirkverbindung ausreicht, und ein zweiter stromloser Zustand erzeugt werden kann, in dem die magnetisierbare Komponente wieder entmagnetisiert ist, wodurch die Wirkverbindung zwischen dem ersten und dem zweiten Element aufhebbar ist.

Erschwerend bei der Anwendung als Dämpfer am Fahrrad ist, dass verschiedene Betriebsarten des Dämpfers mit unterschiedlichen Anforderungen wie beispielsweise "Lockout" oder "schwache Plattform" über längere Zeit vorherrschen können. Mit "Lockout" wird der Mechanismus an einer Federgabel bezeichnet, der den Dämpfer blockiert, während unter "Plattform" verschiedene Dämpferkennlinien verstanden werden. Ein mit Permanentmagneten auf eine geringe Energieaufnahme bei einer spezifischen Betriebsart (z.B. mittlere Plattform) optimierter Dämpfer verbraucht in anderen Betriebsarten (z.B. Lockout) zwangsläufig deutlich mehr Energie.

Es ist deshalb die Aufgabe der vorliegenden Erfindung, einen magnetorheologischen Dämpfer für ein Fahrrad zur Verfügung zu stellen, welcher ohne dauernden Energieverbrauch flexibel einstellbar bzw. anpassbar ist.

Diese Aufgabe wird gelöst durch eine Dämpfereinrichtung für ein Zweirad und insbesondere ein Fahrrad mit den Merkmalen des Anspruchs 1 und durch ein Verfahren mit den Merkmalen des Anspruchs 14.

Bevorzugte Weiterbildungen der Erfindung sind Gegenstand der Unteransprüche. Weitere Vorteile und Merkmale ergeben sich aus den Ausführungsbeispielen.

Die erfindungsgemäße Dämpfereinrichtung für ein Zweirad und insbesondere ein Fahrrad umfasst wenigstens eine erste Dämpferkammer und wenigstens eine zweite Dämpferkammer, welche über wenigstens eine Strömungsverbindung bzw. einen Strömungskanal miteinander gekoppelt sind. In dem Strömungskanal ist ein magnetorheologisches Fluid vorgesehen.

Wenigstens eine Magneteinrichtung ist vorgesehen, um den Strömungskanal wenigstens teilweise einem Magnetfeld aussetzen zu können. Weiterhin ist wenigstens eine Magnetfelderzeugungseinrichtung vorgesehen, mit welcher eine dauerhafte Einstellung und/oder Veränderung der Magnetisierung der Magneteinrichtung durchführbar ist. Die Magneteinrichtung besteht wenigstens teilweise aus einem Material, welches eine Koerzitivfeldstärke in einem Bereich zwischen 10 kA/m und 200 kA/m aufweist. Es ist wenigstens eine Sensoreinrichtung vorgesehen. Die Sensoreinrichtung eignet sich insbesondere zur Regelung der Magnetfeldstärke.

Die erfindungsgemäße Dämpfereinrichtung hat viele Vorteile. Ein ganz erheblicher Vorteil der erfindungsgemäßen Dämpfereinrichtung ist die mögliche Veränderung der Magnetfeldstärke der Magneteinrichtung oder des Magneten über magnetische Impulse der Magnetfelderzeugungseinrichtung. Dadurch wird es ermöglicht, dass mit beispielsweise einem einzigen kurzzeitigen Impuls die magnetischen Eigenschaften der Magneteinrichtung dauerhaft verändert werden können. Für den kurzzeitigen magnetischen Impuls ist nur über einen kurzen Zeitraum Energie nötig, während anschließend die Magnetfeldstärke der Magneteinrichtung dauerhaft vorliegt. Die so eingestellte Magnetfeldstärke liegt über einen erheblich längeren Zeitraum vor als die Zeitdauer des Impulses.

Das Verhältnis der Zeitdauer der dauerhaften Veränderung der Magnetisierung zu der Zeitdauer des magnetischen Impulses ist insbesondere größer 10 und regelmäßig größer 100 und kann grundsätzlich noch sehr viel größer und den Faktor 1000000 weit übersteigen. Die Zeitdauer, die die neu eingestellte Magnetisierung bzw. Magnetfeldstärke erhalten bleibt reicht normalerweise bis zur nächsten gezielten Veränderung an. Während dieser Zeitdauer ist die Dämpfereinrichtung voll betriebsbereit, wie ein herkömmlicher Dämpfer auch. Bei einem normalen aus dem Stand der Technik Dämpfer wird ja auch nicht jede 1/10 Sekunde das Ansprechverhalten geändert, sondern nur wenn geänderte Bedingungen vorliegen, beispielsweise der Wechsel von der Straße ins Gelände oder dergleichen. Eine solche erfindungsgemäße Dämpfereinrichtung benötigt aber nur kurzzeitig Strom, wenn die Dämpfungseigenschaften geändert werden sollen. Nach der Einstellung der Magnetisierung durch einen oder mehrere magnetische Impulse bleibt die neue Magnetisierung als Grundeinstellung erhalten, bis eine erneute Änderung der Grundeinstellung gewünscht wird.

Der Dämpfer benötigt dadurch nur zum Verstellen der Dämpfung Energie, der normale Betrieb kann auch ohne äußere Energiezufuhr erfolgen.

Dabei ermöglicht die Erfindung auch die häufigere Veränderung und Einstellung der Magnetfeldstärke der Magneteinrichtung, ohne dass dafür ständig Energie gebraucht wird. Ein Energieeinsatz ist nur bei einer Veränderung der Einstellung nötig. Dies ermöglicht auch das Einstellen einer Notlaufbetriebsart (Notlaufmagnetfeld), falls die Versorgungsspannung einen unteren Grenzwert erreicht hat.

Die Magneteinrichtung umfasst vorzugsweise wenigstens einen Dauermagneten oder Permanentmagneten. Unter dem Begriff "Magnet" wird im Sinne dieser Anmeldung ein Dauermagnet oder auch ein Permanentmagnet verstanden. Der Magnet ist zumindest ein Teil der Magneteinrichtung. Die Magneteinrichtung umfasst alle Bauteile, die das Magnetfeld erzeugen und im Magnetkreis des Dämpfers leiten. Mit der Magnetfelderzeugungseinrichtung werden die magnetischen Eigenschaften der Magneteinrichtung und damit des Dauermagneten bzw. Magneten dauerhaft eingestellt. "Dauerhaft" ist im Sinne dieser Anmeldung ein Zeitraum, der ein Vielfaches länger ist als die Länge des magnetischen Impulses. Insbesondere sind Zeiträume von wenigstens mehreren Sekunden, Minuten, Stunden, Tagen oder länger damit gemeint. Die eingestellten Eigenschaften müssen insbesondere nicht auf ewig gleich bleiben, sondern können auch natürlichen Alterungs- oder Abschwächungserscheinungen unterliegen, sodass in periodischen Zeitabständen eine Auffrischung erforderlich ist.

Das durch die Magneteinrichtung erzeugte Magnetfeld wirkt ohne Energieversorgung und behält das erzeugte Magnetfeld dauerhaft bei, so lange es nicht durch äußere Umstände wie beispielsweise andere Magnetfelder, Temperatureinflüsse, natürliche Alterungs- oder Abschwächungsprozesse beeinflusst wird. Beispielsweise tritt bei Erreichen der Curie Temperatur ein starker Abfall des Magnetfeldes ein.

Vorzugsweise umfasst die Magnetfelderzeugungseinrichtung wenigstens eine elektrische Spule bzw. einen Elektromagneten oder ist als eine Spule ausgebildet. Eine elektrische Spule eignet sich besonders als Magnetfelderzeugungseinrichtung, da mit einer Spule in kurzer Zeit starke magnetische Felder erzeugt werden können und die Verstellung rein elektrisch geschehen kann. Im Folgenden wird mit dem Begriff "Spule" eine Magnetfelderzeugungseinrichtung gemeint.

Vorzugsweise wird eine Elektrospule verwendet, welche durch einen Strompuls einen magnetischen Impuls erzeugt, welcher das Feld der Magneteinrichtung überlagert. Abhängig von der Stärke des Impulses kann die Magnetisierung der Magneteinrichtung verstärkt, abgeschwächt, aufgehoben oder umgepolt werden. In Folge wird die Magnetfelderzeugungseinrichtung einfach als Spule bezeichnet, es können aber auch andere Verfahren wie beispielsweise ein entsprechend starker Permanentmagnet eingesetzt werden.

Eine bevorzugte erfindungsgemäße Dämpfereinrichtung ist für ein Zweirad und insbesondere ein Fahrrad vorgesehen und weist wenigstens eine erste Dämpferkammer und wenigstens eine zweite Dämpferkammer auf, welche über wenigstens einen Strömungskanal miteinander gekoppelt sind. In wenigstens einem Strömungskanal ist wenigstens ein magnetorheologisches Fluid vorgesehen, welches in dem Strömungskanal durch das Magnetfeld mindestens einer zumindest teilweise aus hartmagnetischem Material bestehenden Magneteinheit oder eines Magneten zumindest teilweise dauerhaft und ohne Energiezufuhr beeinflusst werden kann. Mindestens eine Magnetfelderzeugungseinrichtung und insbesondere mindestens eine elektrische Spule ist vorgesehen, mit welcher eine dauerhafte Veränderung der Magnetfeldstärke der Magneteinrichtung bzw. des Magneten über magnetische Impulse durchführbar ist.

Insbesondere kann es möglich sein, die Magnetfeldstärke des Magneten mit der Spule gezielt zu verändern und gezielt auf einen gewünschten Wert einzustellen. Der eingestellte Wert liegt zwischen Null und der maximalen magnetischen Remanenz des gewählten hartmagnetischen Werkstoffs beziehungsweise zwischen negativer und positiver Remanenz wenn der Magnet umgepolt wird.

Der wenigstens eine Magnet besteht wenigstens teilweise aus wenigstens einem hartmagnetischen Werkstoff, der eine bestimmte Remanenz und Koerzitivfeldstärke aufweist. Ein Material mit solchen Eigenschaften kann dauerhaft magnetisiert und auch dauerhaft wieder entmagnetisiert werden. Die Stärke der Magnetisierung hängt von der Stärke des magnetischen Impulses, grundsätzlich aber nicht von der Dauer des magnetischen Impulses ab, sobald nämlich eine gewisse Mindestimpulsdauer erreicht wird. Als Mindestimpulsdauer wird jener Zeitraum definiert, nachdem das magnetisierbare Material eine der jeweiligen Impulsstärke entsprechende Magnetisierung erreicht hat. Insbesondere wird darunter jener Zeitraum verstanden, nachdem das magnetisierbare Material eine der jeweiligen Impulsstärke entsprechende maximale Magnetisierung erreicht hat. Nach Erreichen der Mindestimpulsdauer erhöhen längere Impulse gleicher Stärke die Magnetisierung nicht mehr. Als Maß für die magnetische Impulsstärke kann die Stromstärke der Spule bzw. die Ladespannung des Kondensators verwendet werden.

Diese Mindestimpulsdauer hängt von vielen Faktoren ab, beispielsweise beeinflusst der Aufbau und das Material des magnetischen Kreises die Ausbildung von Wirbelströmen, welche einer Änderung des Magnetfeldes entgegenwirken bzw. dessen Änderung verzögern. Innerhalb dieser Mindestimpulsdauer kann die Stärke des Magnetischen Pulses auch durch die Pulsdauer variiert werden
Die Impulslänge der magnetischen Impulse ist insbesondere kleiner als 1 Minute, vorzugsweise beträgt die Impulslänge kleiner 10 Sekunden und besonders bevorzugt kleiner 1 Sekunde. Für eine dauerhafte Veränderung und Einstellung der Magnetisierung des Magneten können magnetische Impulse mit einer Impulslänge im Bereich von wenigen Mikrosekunden ausreichen, wobei anschließend die eingestellte Magnetisierung des Magneten über Minuten, Stunden, Tage und noch weitaus größere Zeiträume dauerhaft zur Verfügung steht, bis mit dem nächsten magnetischen Impuls die Magnetisierung erneut verändert wird. Üblicherweise begrenzt die Einrichtung zur Erzeugung des magnetischen Impulses die minimale Impulsdauer, Zeiten im Bereich von Hundertstel- oder Zehntelsekunden sind ebenso möglich wie wenige Millisekunden oder weniger.

Um eine bestehende Magnetisierung aufzuheben, kann mit einem magnetischen Wechselfeld mit abnehmender Feldstärke gearbeitet werden. Eine bevorzugte Ausführung verwendet dazu einen gedämpften elektrischen Schwingkreis. Vorstellbar ist aber auch mit einer Folge einzelner magnetischer Impulse mit abnehmender Intensität und jeweils umgekehrter Polarität die Magnetisierung des Magneten zu verringern oder aufzuheben.

Eine Schwingkreiseinrichtung kann aus einer Spule und einem Kondensator besteht, wobei die Spule der Magnetfelderzeugungseinrichtung Teil der Schwingkreiseinrichtung sein kann.

In allen Ausgestaltungen kann die erste Dämpferkammer auch als ein erster Dämpferbereich in einer gemeinsamen Dämpferkammer ausgebildet sein, in der die zweite Dämpferkammer einen zweiten Dämpferbereich einnimmt.

Vorzugsweise ist eine Steuereinrichtung vorgesehen, um die magnetischen Impulse der Spule gesteuert abzugeben. Denkbar ist auch eine Regelung, die über geeignete Sensoren und mindestens eine Spule Form und Stärke des erzeugten Magnetfeldes beeinflusst.

In allen Ausgestaltungen ist es denkbar, die voreingestellte Magnetfeldstärke des Magneten (dauerhaftes Magnetfeld der Magneteinrichtung) zusätzlich durch ein geringfügiges Magnetfeld (variables Magnetfeld der Spule) zu beeinflussen, ohne dadurch die dauerhaft eingestellte Magnetfeldstärke des Magneten zu verändern. Hierzu kann entweder die bereits vorhandene Spule, oder eine zusätzliche Spule verwendet werden.

Dies macht beispielsweise dann Sinn, wenn unterschiedliche Arbeitspunkte benötigt werden und bei jedem Arbeitspunkt eine geringfügige, aber kontinuierliche oder stufenweise Anpassung erforderlich ist, um jeweils optimale oder nahezu optimale Betriebsbedingungen zu ermöglichen.

Vorteilhafterweise ist wenigstens eine Kondensatoreinrichtung vorgesehen, um wenigstens einen Teil der elektrischen Energie zur Erzeugung wenigstens eines magnetischen Impulses zur Verfügung zu stellen. Eine Kondensatoreinrichtung mit einem oder mehreren elektrischen Kondensatoren bietet bei geringem Gewicht und geringem Platzbedarf die vorteilhafte Möglichkeit der Speicherung der elektrischen Energie für einen oder mehrere magnetische Impulse, sodass auch bei Verwendung einer Stromquelle, die nur eine geringe Stromstärke und/oder Spannung zur Verfügung stellt, nach Aufladung des Kondensators ein gewünschter magnetischer Impuls ausgelöst werden kann. Eine Kondensatoreinrichtung bietet weiterhin den Vorteil, dass jederzeit die elektrische Energie zur Verfügung steht, um einen magnetischen Impuls auszulösen und somit die Dämpfungseigenschaften zu ändern. Die Reaktionsgeschwindigkeit ist sehr hoch.

Ein weiterer Vorteil ist, dass über die Ladespannung der Kondensatoreinrichtung die Stärke des magnetischen Pulses sehr genau bestimmt werden kann, ohne die Pulsdauer zu variieren.

Erfindungsgemäß ist wenigstens eine Sensoreinrichtung vorgesehen. Beispielsweise kann ein Magnetfeldsensor vorgesehen sein, der die magnetische Feldstärke in dem Strömungskanal ermittelt oder der ein Maß für die magnetische Feldstärke in dem Strömungskanal ableitet. Direkt vom Magnetfeld abhängige physikalische Größen können erfasst und aus ihnen das Magnetfeld bestimmt werden. Möglich ist auch der Einsatz weiterer Sensoren wie beispielsweise eines Temperatursensors. Zudem können Kraft-, Druck-, Weg- oder Beschleunigungsaufnehmer eingesetzt werden um Daten für eine Steuerung bzw. Regelung zu gewinnen.

Vorzugsweise ist der Strömungskanal als flacher Spalt ausgeführt oder umfasst einen flachen Spalt, der gerade oder auch gebogen sein kann. Vorteilhafterweise ist die Spaltbreite in Richtung des erzeugbaren magnetischen Feldes relativ gering und die Spaltlänge quer dazu relativ groß. So ist das Verhältnis der Spaltlänge zu der Spaltbreite vorzugsweise größer 2 und insbesondere größer als 5. Die Spaltbreite ist insbesondere kleiner als 5 mm und vorzugsweise kleiner als 2 mm. Das in dem Strömungskanal das angelegte magnetische Feld geschwächt wird, sind geringere Spaltbreiten günstig.

Als vorteilhaft haben sich Spaltbreiten im Bereich von 0,5 bis 1 mm erwiesen, wobei in bestimmten Anwendungen auch Bereiche von 0,1 bis 10 mm oder auch 0,01 bis 100 mm denkbar sind. Um auf kleinstem Bauraum einen großen Einstellbereich zu erzielen, können mehrere einzelne Spalte eingesetzt werden. Der magnetische Kreis kann dabei klein gehalten werden, wenn die einzelnen Spalte übereinander liegen (seriell im magnetischen Kreis). Die vom Magnetfeld durchflutete Querschnittsfläche ändert sich mit der Spaltzahl nicht, die Feldstärke muss aber auf die Summe der einzelnen Spaltbreiten angepasst werden.

Die Spaltlänge ist im Wesentlichen abhängig von der maximal zu erreichenden Gegenkraft und der Strömungsgeschwindigkeit. Die Kettenbildung der Partikel im Magnetfeld dauert eine gewisse Zeit (dwell time, üblicherweise kleiner als 1 ms). Während dieser Zeit wird die dem Magnetfeld entsprechende Gegenkraft aufgebaut. Ist die Spaltlänge kürzer als das Produkt aus dwell time und Strömungsgeschwindigkeit, dann passieren die Partikel den Spalt bevor die Kettenbildung vollständig abgeschlossen ist. Die erreichbare Gegenkraft sinkt dabei deutlich ab, das System arbeitet nicht effizient.

In allen Ausgestaltungen und Weiterbildungen besteht der Magnet insbesondere wenigstens teilweise aus einem solchen Material und ist derart strukturiert, dass in dem Strömungskanal eine magnetische Flussdichte von wenigstens 0,3 Tesla und insbesondere von wenigstens 0,5 Tesla erzeugbar ist. Dies bedeutet nicht, dass ständig eine solche Flussdichte eingestellt sein muss, sondern nur, dass bei max. erzeugbarer Feldstärke des Magneten die angeführte magnetische Remanenz in dem Strömungskanal erzeugbar sein soll. Insbesondere beträgt die magnetische Remanenz wenigstens 0,5 und insbesondere 0,8 Tesla.

Durch konstruktive Maßnahmen kann beispielsweise eine Bündelung der magnetischen Feldlinien erzielt werden, wodurch in dem Spalt bzw. Strömungskanal eine noch höhere Flussdichte ermöglicht wird. Dabei kann über das Verhältnis der durchfluteten Flächen das Verhältnis der Flussdichten im Magneten bzw. im Strömungskanal beeinflusst werden.

Erfindungsgemäß besteht der Magnet wenigstens teilweise aus einem Material, welches eine Koerzitivfeldstärke größer als 10 kA/m aufweist. Insbesondere sind auch Koerzitivfeldstärken von 30, 40 oder 50 oder auch 100 oder 150 kA/m möglich.

Erfindungsgemäß besteht der Magnet bzw. die Magneteinrichtung wenigstens teilweise aus einem Material, welches eine Koerzitivfeldstärke kleiner als 200 kA/m aufweist. Die Koerzitivfeldstärke liegt deshalb erfindungsgemäß in einem Bereich zwischen 10 kA/m und 200 kA/m.

Das bedeutet, dass die Magneteinrichtung im vorhandenen magnetischen Kreis einerseits eine hohe magnetische Feldstärke erzeugen kann, während andererseits die zur Ummagnetisierung nötige Energie nicht zu groß wird.

Bevorzugt besteht die Magneteinrichtung wenigstens teilweise aus einem Material wie Alnico oder einem Material mit vergleichbaren magnetischen Eigenschaften wie beispielsweise FeCrCo, FeCoVCr oder CuNiFe. Besonders bevorzugt wird Alnico oder ein vergleichbares Material verwendet. Alnico ist eine Legierung aus Aluminium, Nickel und Cobalt und teilweise auch anderen Elementen wie beispielsweise Eisen oder Kupfer. Aus Alnico können Permanentmagnete hergestellt werden, die üblicherweise eine Remanenz von 0,7 bis 1,2T und eine Koerzitivfeldstärke von 30 bis 150kA/m oder mehr aufweisen können.

Ein Alnico-Magnet weist relativ hohe Koerzitivfeldstärken auf und setzt äußeren Magnetfeldern dementsprechend einen hohen Widerstand entgegen, sodass eine Ummagnetisierung bzw. Entmagnetisierung im geschlossenen magnetischen Kreis mit normalen in der Natur vorkommenden Feldern nicht erreicht wird. Andererseits ist die Koerzitivfeldstärke im Vergleich z.B. zu Neodym relativ gering, sodass mit einem Elektromagneten bzw. einer elektrischen Spule eine Entmagnetisierung mit relativ geringem Energieaufwand möglich ist.

Vorteilhaft an AlNiCo ist auch der Verlauf der Entmagnetisierungskurve (2. Quadrant im BH-Diagramm), die hohe Temperaturstabilität und die guten chemischen Eigenschaften relativ zu anderen üblichen Magnetmaterialien.

Befindet sich der Dämpfer im Lockout, dann soll die Kolbenbewegung bei allen Kräften unter einer definierten Lockout-Kraft verhindert werden. Dazu wird die Strömung der magnetorheologischen Flüssigkeit durch ein möglichst homogenes Magnetfeld im Strömungskanal blockiert. In diesem Fall ist die Ausführung des Strömungskanals als flacher Spalt von großem Vorteil.

Im normalen Dämpferbetrieb ist es bevorzugt, dass der Strömungskanal einem inhomogenen Magnetfeld aussetzbar ist. Die Inhomogenität des Magnetfeldes über den Strömungskanal weist vorzugsweise ein Verhältnis von größter zu kleinster Feldstärke von größer als 10 und insbesondere größer 100 oder sogar 1000 auf. Durch die Inhomogenität kann der Strömungskanal normal auf die Richtung des strömenden Mediums anhand der Feldstärke in verschiedene Abschnitte eingeteilt werden. Bereiche mit keinem oder nur sehr geringem Feld werden als Durchlassabschnitte und Bereiche mit starkem Feld als Sperrabschnitte bezeichnet. Die dazwischen liegenden Bereiche sind die Übergangsabschnitte, in denen die Feldstärke von einem tiefen auf einen höheren Wert ansteigt.

Vorzugsweise weist der Strömungskanal wenigstens einen Übergangsabschnitt und wenigstens einen Sperrabschnitt und/oder wenigstens einen Durchlassabschnitt auf. Das Feldstärkeverhältnis im Sperrabschnitt zum Durchlassabschnitt ist insbesondere größer 10 und besonders bevorzugt größer als 100. Das Feldstärkeverhältnis von dem Übergangsabschnitt zum Durchlassabschnitt ist insbesondere größer als 5 und vorzugsweise größer als 10. Die einzelnen Abschnitte können fließend ineinander übergehen. Möglich ist aber auch eine mechanische Trennung der einzelnen Abschnitte voneinander durch z.B. Trennwände.

Durch einen Bypass- bzw. Durchlassabschnitt wird ein Nulldurchgang des Kraft-Geschwindigkeitsverlaufs angestrebt, bei dem sich ein ruhender Kolben schon bei kleinen oder kleinsten Kräften zu bewegen beginnt und somit auftretende Stöße dämpft. Ein solcher Nulldurchgang des Kraft-Geschwindigkeitsverlaufs kann durch einen Bypass-Abschnitt gewährleistet werden.

Bei kleinen Geschwindigkeiten strömt das magnetorheologische Fluid ausschließend durch den Bypass. Mit steigender Geschwindigkeit erhöht sich der Druckverlust im Bypass bis ein kritischer Wert erreicht wird, bei dem die Schubspannung des magnetorheologischen Fluids im Sperrabschnitt des Strömungskanals erreicht und überschritten wird. Ab dieser Druckdifferenz strömt das magnetorheologische Fluid nicht nur in dem Bypassabschnitt sondern im gesamten Strömungskanal. Dadurch steigt der Druck bei weiter steigender Geschwindigkeit weniger stark an als zuvor. Systembedingt liegt aber ein Knickpunkt im Steigungsverhalten vor, wenn ab einer festen Druckdifferenz das magnetorheologische Fluid den Sperrabschnitt durchströmt. Bei Stoßdämpfern am Fahrrad wird ein sanfter Übergang vom "Low Speed"- in den "High Speed"-Bereich angestrebt, um ein komfortables Fahrverhalten zu ermöglichen. Dazu muss die Knickstelle im Druck-Geschwindigkeitsverlauf entsprechend stark abgerundet werden. Erst dann zeichnet sich ein Dämpfer durch hohen Fahrkomfort und erhöhte Sicherheit durch besseren Fahrbahnkontakt aus.

Das kann hier erzielt werden, indem ein Übergangsabschnitt mit einem inhomogenen Magnetfeld zur Verfügung gestellt wird, wobei mit zunehmender Druckdifferenz einzelne Abschnitte des Übergangsabschnitts ein Durchströmen des magnetorheologischen Fluids ermöglichen. Mit steigender Geschwindigkeit vergrößert sich durch die zunehmende Druckdifferenz der Bypassabschnitt zu Lasten des Übergangsabschnittes, die Kurve im Druck-Geschwindigkeitsverlauf flacht also zunehmend ab. Ab einer gewissen Druckdifferenz wird, wie zuvor beschrieben, auch der Sperrbereich durchströmt, wobei dieser Übergang fließend ist.

In bevorzugten Ausgestaltungen ist eine Querschnittfläche des Strömungskanals einstellbar. Beispielsweise kann über eine Schiebe- oder Drehbewegung die zur Verfügung stehende Fläche des Strömungskanals vergrößert oder verkleinert werden, um unterschiedliche Dämpfungseigenschaften einzustellen. Dann kann eine Einstellung des Dämpfers nicht nur über die Einstellung der Magnetisierung des Magneten erfolgen, sondern auch über die Größe der Querschnittsfläche des Strömungskanals.

Vorzugsweise ist wenigstens ein Anteil des Übergangsabschnitts und/oder des Durchlassabschnitts an der Querschnittsfläche des Strömungskanals einstellbar.

Insbesondere kann die Magneteinrichtung oder Teile von ihr relativ zu dem Strömungskanal bewegbar vorgesehen sein. Dadurch kann beispielsweise die Stärke des Magnetfeldes oder die Größe des Bypass/Durchlass-Abschnitts verändert werden.

Vorzugsweise ist wenigstens ein Teil des Magneten benachbart zu der Spule angeordnet oder von der Spule umgeben. Möglich und bevorzugt ist es, dass wenigstens ein Teil oder die gesamte Magneteinrichtung an die Spule angrenzt.

Vorzugsweise umgibt die Spule einen Kern, der zumindest teilweise aus einem Magneten besteht, dessen Magnetisierung durch die magnetischen Impulse eingestellt wird. Wenn der Kern oder Magnet insgesamt von der Spule umgeben wird, wird sichergestellt, dass er im maximalen Wirkbereich der Spule angeordnet ist und eine Änderung der Magnetisierung effizient erfolgen kann.

Vorzugsweise sind der Kern, die Spule und der wenigstens eine Strömungskanal von einem magnetisch leitenden Bauteil, dem Ringleiter, umgeben. Der ferromagnetische Ringleiter hat die Aufgabe, das Magnetfeld zu schließen und die Verluste des Magnetfeldes in dem Ringleiter gering zu halten.

Ringleiter und Kern können jeweils teilweise oder zur Gänze aus Alnico oder einem vergleichbaren hartmagnetischen Material sein. Durch magnetische Impulse der Spule werden sie zumindest teilweise zu Permanentmagneten variabler Stärke.

Der Strömungskanal grenzt insbesondere an den Kern, den Ringleiter und wenigstens einen seitlichen magnetischen Isolator. Dabei hat der magnetische Isolator die Aufgabe, die magnetischen Feldlinien in dem Kern in Richtung des Strömungskanals zu bündeln oder wenigstens nicht davon abzulenken, sodass in dem Strömungskanal das magnetische Feld zur Beeinflussung des magnetorheologischen Fluids im Wesentlichen senkrecht zur Strömungsrichtung erzeugbar ist.

In allen Ausgestaltungen ist es möglich, dass in wenigstens einem Strömungskanal durch wenigstens eine Zwischenwand der Strömungskanal in wenigstens zwei Teilkanäle unterteilt wird. Durch eine oder mehrere Zwischenwände wird z.B. eine fächerartige Struktur in dem Strömungskanal erzeugt, wodurch eine besonders effektive Dämpfung ermöglicht wird, da sich der magnetorheologische Effekt multipliziert.

Vorteilhafterweise bestehen die Wände aus einem ferromagnetischen Material, um den magnetischen Widerstand durch die Zwischenwände gering zu halten. Insbesondere ist auch ein Material mit Remanenzeigenschaften möglich, wie hartmagnetische Werkstoffe.

In vorteilhaften Ausgestaltungen sind wenigstens zwei Spulen vorgesehen, die insbesondere separat ansteuerbar sind, um eine gezielte Beeinflussung des Magnetfeldes zu erzielen. Durch zwei Spulen, die separate magnetische Impulse ausgeben, können beispielsweise zwei verschiedene Magnete unterschiedlich magnetisiert werden, sodass die Größe eines Übergangsabschnittes oder eines Durchlassabschnitts an dem Strömungskanal entsprechend einstellbar ist. Beispielsweise ist es möglich, dass eine erste Spule den gesamten magnetischen Kreis beeinflusst, während eine zweite Spule nur einen Teil des magnetischen Kreises beeinflusst, wobei eine örtliche Verstärkung oder Schwächung des resultierenden Magnetfeldes möglich ist.

Möglich ist es auch, dass die erste Spule über die Magnetisierung eines Magneten das Magnetfeld in einem ersten Strömungskanal einstellt und die zweite Spule über das Magnetisieren eines zweiten Magneten das Magnetfeld in einem zweiten Strömungskanal. Denkbar ist auch, dass beide Spulen auf denselben Magneten wirken und so Form, Ausrichtung und Stärke der Magnetisierung steuern können.

In vorteilhaften Ausgestaltungen ist eine Schwingkreiseinrichtung vorgesehen, um ein sich abschwächendes magnetisches Wechselfeld zu erzeugen. Mit einem sich abschwächenden magnetischen Wechselfeld kann eine definierte Magnetisierung ein- und sichergestellt werden. Unabhängig von der aktuellen Polarisation und Feldstärke des Magneten kann durch ein sich abschwächendes magnetisches Wechselfeld eine zuverlässige Entmagnetisierung gewährleistet werden, sodass für den nächsten Einstellvorgang der magnetischen Feldstärke definierte Ursprungsbedingungen vorliegen. Durch eine gezielte Steuerung der Stromstärke der elektrischen Spule wird dann ein definierter magnetischer Impuls erzeugt, der aufgrund der Remanenz des Magneten eine entsprechend genau definierte Feldstärke in der Magneteinrichtung einstellt. Vorzugsweise ist die Spule selbst Teil des Schwingkreises.

Beispielsweise ist es möglich, dass zu Beginn jeder Fahrt oder in gewissen zeitlichen Abständen der Magnet des Dämpfers gezielt entmagnetisiert wird, um sich aufsummierende Abweichungen auszuschließen.

Möglich ist es auch, dass vor jeder Einstellung der Feldstärke der Magnet zunächst entmagnetisiert wird, um definierte Ausgangsbedingungen einzustellen.

In allen Ausgestaltungen ist es möglich und bevorzugt, dass die erste Dämpferkammer und die zweite Dämpferkammer wenigstens teilweise in einem gemeinsamen Dämpfergehäuse angeordnet und durch wenigstens einen Dämpferkolben voneinander getrennt sind. Dabei kann der Dämpferkolben wenigstens einen Strömungskanal aufweisen, wobei der Strömungskanal auf der Außenseite des Dämpferkolbens angeordnet sein kann oder aber wenigstens ein Strömungskanal durch den Dämpferkolben hindurchführt.

Wenn auf der Außenseite des Dämpferkolbens ein Strömungskanal vorgesehen ist, kann das Dämpfergehäuse den Ringleiter der Magneteinrichtung bilden. Dazu ist es erforderlich, dass das Dämpfergehäuse wenigstens über dem Abschnitt, über den sich der Dämpferkolben bewegt, aus einem magnetisch leitenden Material besteht. Bei Anwendungen, bei denen das Gewicht eine große Rolle spielt, ist es deshalb vorteilhaft, wenn der Strömungskanal oder die Strömungskanäle durch den Dämpfungskolben hindurch vorgesehen sind, da dann der Ringleiter selbst Teil des Kolbens sein kann, was ein geringes Gewicht ermöglichen kann.

Vorzugsweise ist der Dämpferkolben entlang einer Längsachse axial verschieblich aufgenommen. Dabei ist eine Verbindungsachse des Nordpols und des Südpols der Magneteinrichtung insbesondere quer zur der Längsachse - entlang derer der Dämpferkolben verschieblich ist - ausgerichtet.

Eine weitere erfindungsgemäße Dämpfereinrichtung ist für ein Zweirad und insbesondere ein Fahrrad vorgesehen und weist wenigstens eine erste Dämpferkammer und wenigstens eine zweite Dämpferkammer auf, welche über wenigstens einen Strömungskanal miteinander gekoppelt sind, welcher mit wenigstens einem magnetorheologisches Fluid versehen ist. Wenigstens ein Dauermagnet ist vorgesehen, um den Strömungskanal wenigstens teilweise einem Magnetfeld aussetzen zu können. Mindestens eine Magnetfelderzeugungseinrichtung ist vorgesehen, mit welcher durch wenigstens einen magnetischen Puls eine dauerhafte Änderung des statischen Magnetfelds des Dauermagneten erzielbar, erzeugbar oder einstellbar ist.

Das erfindungsgemäße Verfahren zum Betreiben einer Dämpfereinrichtung insbesondere für ein Zweirad und insbesondere für ein Fahrrad, wird mit einer Dämpfereinrichtung durchgeführt, welche wenigstens eine erste und wenigstens eine zweite Dämpferkammer aufweist, die über wenigstens einen Strömungskanal miteinander gekoppelt sind. In dem Strömungskanal ist wenigstens ein magnetorheologisches Fluid vorgesehen. Dem Strömungskanal ist wenigstens eine Magneteinrichtung zugeordnet, um den Strömungskanal einem Magnetfeld des Magneten auszusetzen. Dabei wird über magnetische Impulse einer Spule die Magnetisierung des Magneten dauerhaft eingestellt und verändert.

Auch das erfindungsgemäße Verfahren hat viele Vorteile, da über kurzzeitige magnetische Impulse eine dauerhafte Einstellung bzw. Veränderung der magnetischen Eigenschaften der Magneteinrichtung bzw. des Magneten möglich ist. Dadurch wird nur Energie und insbesondere elektrische Energie benötigt, wenn eine Veränderung der Dämpfereigenschaften vorgenommen werden soll.

Vorzugsweise werden die magnetischen Impulse über eine elektrische Spule erzeugt, die insbesondere über wenigstens einen Kondensator mit der benötigen Energie versorgt wird.

Mit einer Schwingkreisanordnung kann ein sich gezielt abschwächendes magnetisches Wechselfeld erzeugt werden, um die Magneteinrichtung bzw. den wenigstens einen Magneten gezielt zu entmagnetisieren. Dadurch kann ein Grundzustand hergestellt werden, von dem aus unterschiedliche magnetische Feldstärken des Magneten über entsprechende magnetische Impulse eingestellt und erreicht werden können.

Sensoren, Regler, die Steuerung, eine oder auch mehrere Kondensatoreinrichtungen, die Schwingkreiseinrichtung und/oder die Versorgung können am oder im Dämpfer angeordnet sein.

Vorteilhafterweise sind die magnetischen Impulse kürzer als 1 Sekunde und insbesondere kürzer als 10 Millisekunden, um eine Veränderung der magnetischen Feldstärke der Magneteinrichtung zu erzielen. Je nach Spule und deren Versorgung sind auch Impulszeiten im Bereich von 1 Millisekunde oder weniger, insbesondere auch im Mikrosekundenbereich denkbar.

In allen Ausgestaltungen ist es bevorzugt, dass die erzeugbare Feldstärke der Spule am Magneten größer ist als die Koerzitivfeldstärke des Magnetmaterials. Um eine Sättigung des Magneten zu erreichen sollte die von der Spule erzeugbare Feldstärke in Abhängigkeit vom Magnetmaterial entsprechend hoch sein und vorzugsweise ungefähr den fünffachen Wert oder mehr der Koerzitivfeldstärke erreichen. Dadurch wird sichergestellt, dass eine beliebige Magnetisierung der Magneteinrichtung vorgenommen werden kann.

Vorzugsweise werden wenigstens zwei Magnetfelderzeugungseinrichtungen bzw. Spulen vorgesehen, deren Feldstärken getrennt gesteuert werden können, um einen gewünschten örtlichen Verlauf des Feldes der Magneteinrichtung zu erzeugen.

In allen Ausgestaltungen ist es möglich, dass die relative Lage der Magneteinrichtung oder deren Teile zu der Lage des Strömungskanals eingestellt wird, um beispielsweise die Größe des Durchlass-Abschnitts oder des Übergangsabschnitts einzustellen.

Insbesondere kann durch einen magnetischen Impuls der Spule die Form und Stärke des Magnetfeldes des Magneten dauerhaft in dem Magneten gespeichert werden.

In bevorzugten Ausgestaltungen weisen einzelne Bereiche der Magneteinrichtung unterschiedliche hartmagnetische Eigenschaften auf, beispielsweise durch unterschiedliche Materialien oder unterschiedliche Geometrien, wodurch sie bei einem entsprechenden Magnetfeld der Magnetfelderzeugungseinrichtung in Bereiche mit fester oder variabler Magnetisierung eingeteilt werden können.

Es ist möglich, dass durch die Ausnutzung der Remanenz und des Impulsbetriebs einer Spule, die nicht immer bestromt werden muss, ein Gewichts- und Raumvorteil erzielt werden kann. Die Drähte der Spule können dünner und leichter dimensioniert werden, weil sie jeweils nur für eine kurze Betriebszeit bestromt werden. Das kann Vorteile bei Gewicht, Platzbedarf und Kosten ergeben. Eine dauerhaft bestromte Spule müsste in der Regel mit stärkeren Drähten etc. ausgerüstet werden, um der dauerhaften Belastung gewachsen zu sein. Die bei kurzzeitigen Impulsen auftretenden Verlustleistungen können aber in dem Bauteil selbst abgepuffert werden.

Die zum Betrieb benötigte Energie kann von einem Dynamo oder durch Elemente erzeugt werden, die Vibrationen in Energie wandeln oder durch sonstige Generatoren erzeugt oder abgegriffen werden.

Es ist auch möglich, dass die Magnetfelderzeugungseinrichtung außerhalb des Dämpfergehäuses vorgesehen ist und die magnetischen Impulse durch die Zylinderwand des Dämpfergehäuses wirkt und auf die Magneteinrichtung im Inneren des Dämpfergehäuses einwirkt.

Weitere Vorteile und Eigenschaften der vorliegenden Erfindung ergeben sich aus dem Ausführungsbeispiel, das mit Bezug auf die beiliegenden Figuren 1 - 9 im Folgenden beschrieben wird.

In den Figuren zeigen:
- Fig. 1: eine schematische geschnittene Seitenansicht einer erfindungsgemäßen Dämpfereinrichtung in der Grundstellung;
- Fig. 2: eine weitere geschnittene Seitenansicht der Dämpfereinrichtung nach Fig. 1;
- Fig. 3: das Detail A aus Fig. 1 in vergrößerter Darstellung;
- Fig. 4: das Ventil der Dämpfereinrichtung nach Fig. 1 in vergrößerter perspektivischer Darstellung;
- Fig. 5: einen Querschnitt der Dämpfereinrichtung nach Fig. 1;
- Fig. 6: ein schematisches Zeitdiagramm der magnetischen Feldstärke;
- Fig. 7: eine schematische Darstellung eines alternativen Ventils;
- Fig. 8: eine schematische Darstellung eines weiteren Ventils; und
- Fig. 9: die Kennlinie eines Ventils mit einem Übergangsabschnitt.

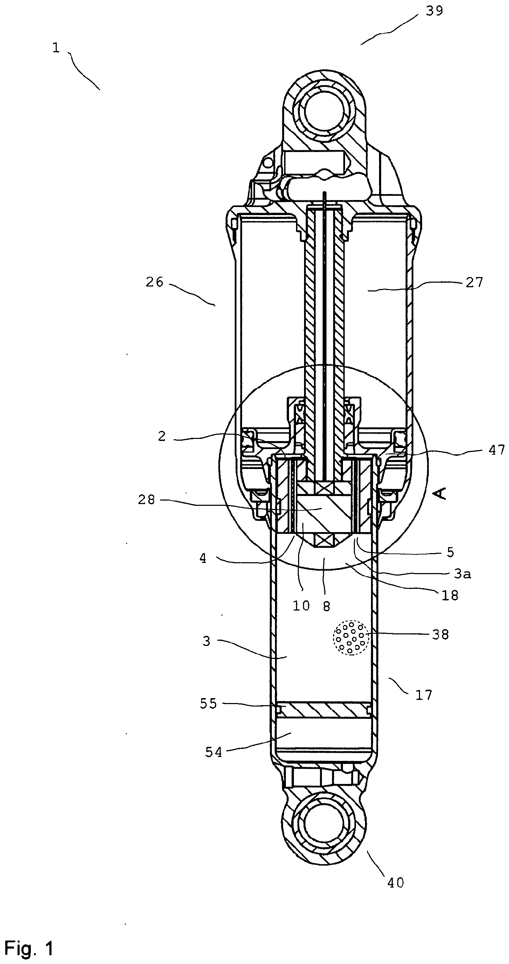

Mit Bezug auf die beiliegenden Figuren 1 bis 9 wird ein Ausführungsbeispiel der Erfindung anhand einer Dämpfereinrichtung 1 für ein Fahrrad beschrieben. Die Dämpfereinrichtung 1 ist hier als Hinterraddämpfer ausgeführt und weist ein erstes Ende 39 und ein zweites Ende 40 auf, welche mittelbar oder unmittelbar mit dem Rahmen bzw. dem Hinterrad entsprechend verbunden werden.

In anderen Ausgestaltungen ist es auch möglich, dass eine Federgabel mit einer entsprechenden Dämpfereinrichtung 1 versehen wird.

Die in Fig.1 im Schnitt dargestellte Dämpfereinrichtung 1 umfasst einen Dämpfer, der hier eine erste Dämpferkammer 2 und eine zweite Dämpferkammer 3 umfasst, die von einem Dämpferkolben 18 voneinander getrennt sind. In dem Dämpferkolben 18 sind Strömungskanäle 4 und 5 als Strömungsverbindungen 6 vorgesehen, die hier zur Dämpfung in der Druckstufe und in der Zugstufe dienen.

Sowohl die erste Dämpferkammer 2 als auch die zweite Dämpferkammer 3 und die Strömungskanäle 4 und 5 sind hier mit einem magnetorheologischen Fluid 38 gefüllt, welches ferromagnetische Partikel, wie beispielsweise Carbonyleisenpulver in einer Trägerflüssigkeit enthält. Die Trägerflüssigkeit basiert vorzugsweise auf Öl mit Zusatzstoffen wie Stabilisatoren, Frostschutzmitteln, Abriebs- und Viskositätsverbesserern. Das magnetorheologische Fluid 38 ist in Fig. 1 stark schematisch in einem Ausschnitt dargestellt.

Der Dämpferkolben 18 dient hier als Ventil 20, mit welchem die Strömung des magnetorheologischen Fluids 38 von der ersten Dämpferkammer 2 zu der zweiten Dämpferkammer 3 über die Strömungskanäle 4 und 5 gesteuert wird.

Eine Kolbenstange 27 schließt sich an den Dämpferkolben 18 an und führt durch eine hier als Gasfeder ausgeführte Federeinrichtung 26. Die Federeinrichtung 26 umfasst eine erste Federkammer 41 und eine zweite Federkammer 42, die von einem Kolben bzw. Gaskolben 47 getrennt sind.

An dem ersten Ende 39 kann eine Einstelleinrichtung vorgesehen sein, um z. B. Änderungen an der Federcharakteristik vorzunehmen. Die Einstelleinrichtung kann z. B. Dreheinheiten als Einstellelemente umfassen.

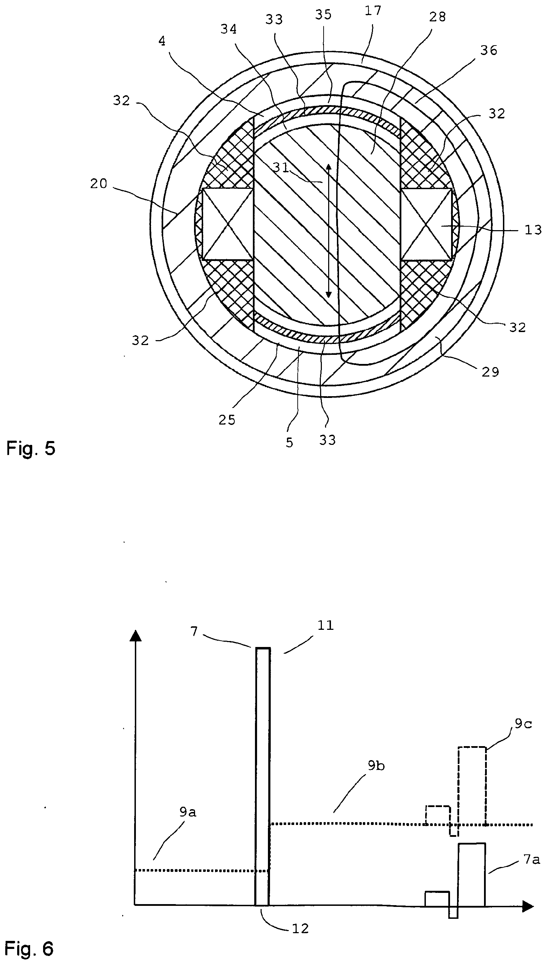

An dem Ende der zentralen Kolbenstange 27 ist der Dämpferkolben 18 vorgesehen der eine Magneteinrichtung 10 mit wenigstens einem Kern 28 (vgl. Fig. 5) enthält.

Zur Abdichtung des Dämpferkolbens 18 in dem Dämpfergehäuse 17 kann ein Kolbenring als Dichtung vorgesehen sein. Es ist aber auch möglich, dass das Magnetfeld der Magneteinrichtung 10 für eine vollständige Abdichtung zum Dämpfergehäuse 17 sorgt, da das Magnetfeld der Magneteinrichtung 10 eine Verkettung der Partikel in dem magnetorheologischen Fluid bewirkt, sodass eine ausreichende Abdichtung bewirkbar ist.

Der Kern 28 der Magneteinrichtung 10 ist von einer Spule 13 als Magnetfelderzeugungseinrichtung 8 umgeben. Der Kern 28 besteht zumindest teilweise aus einem hartmagnetischen Material mit einer Koerzitivfeldstärke, die größer als 1000 A/m und insbesondere größer als 10000 A/m ist. Hier besteht der Kern vollständig aus Alnico, welches eine hohe Koerzitivfeldstärke aufweist und sehr temperaturstabil ist. Es ist von Vorteil, wenn nur ein oder mehrere Teile des Kerns hartmagnetisch sind, um den Aufwand für das Magnetisieren klein zu halten.

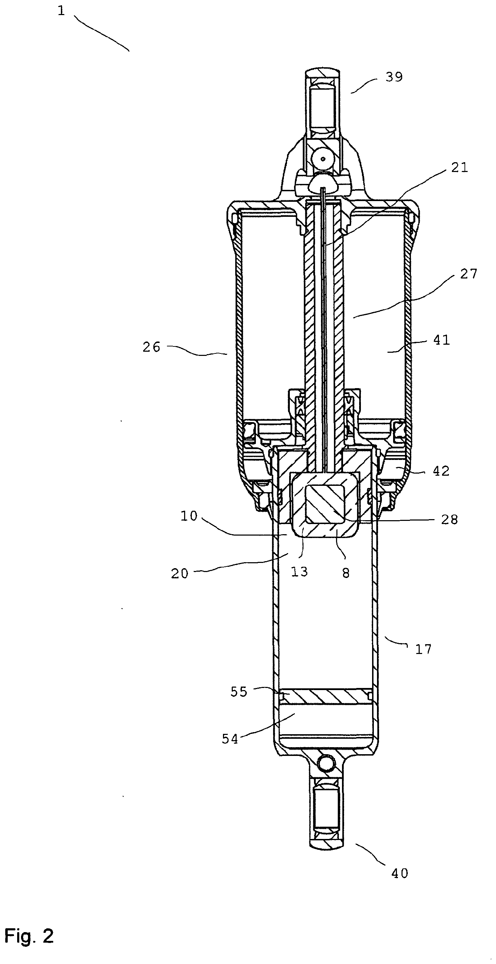

In Fig. 2 ist ein Längsschnitt durch die Dämpfereinrichtung 1 dargestellt, wobei der Längsschnitt hier rechtwinklig zu der Darstellung gemäß Fig. 1 gewählt wurde.

An dem als Ventil 20 ausgeführten Dämpferkolben ist in der Darstellung gemäß Fig. 2 gut erkennbar wie die elektrische Spule 13 den hartmagnetischen Kern 28 der Magneteinrichtung 10 umgibt. Dadurch wird sichergestellt, dass bei Erzeugung eines magnetischen Impulses durch die elektrische Spule 13 eine maximale Wirkung auf den hartmagnetischen Kern 28 erzeugt wird, sodass eine zuverlässige Einstellung und Veränderung der Magnetfeldstärke der Magneteinrichtung 10 erreicht wird.

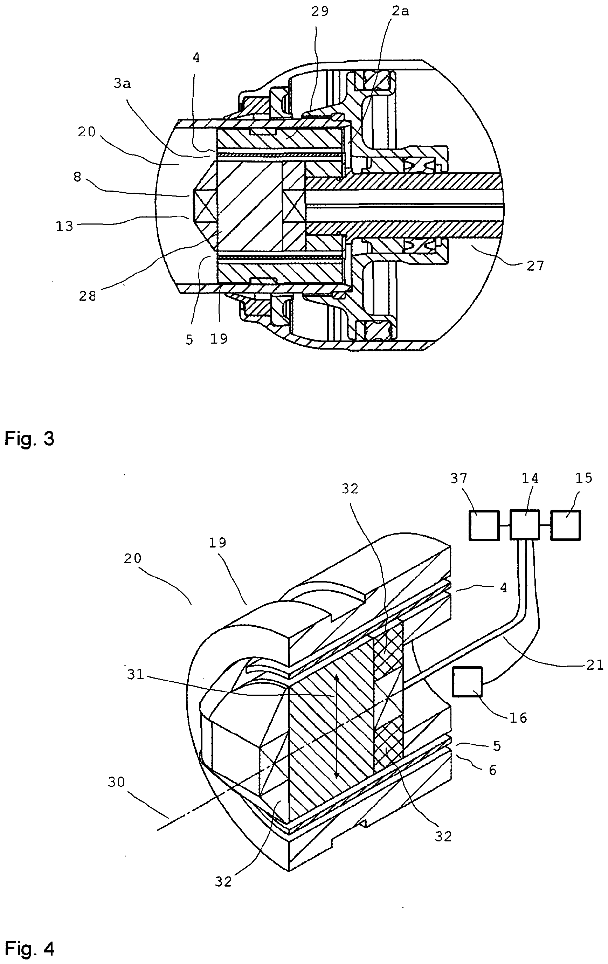

In der Darstellung gemäß Fig. 2 sind die Steuer- und Energieleitungen 21 klar erkennbar, mit denen die benötigte Energie für die elektrische Spule 13 zugeführt und die Steuerung vorgenommen wird. Gegebenenfalls ist es auch möglich, dass die Steuereinrichtung 14 (vgl. Fig. 4) innerhalb der Dämpfereinrichtung 1 vorgesehen ist, sodass dann die Leitungen 21 nur zur Energiezufuhr dienen.

Die Ausgleichsfeder 54 ist typischerweise mit Gas gefüllt und wird über einen Trennkolben 55 von der Dämpferkammer 3 getrennt. Die Ausgleichsfeder 54 dient zum Ausgleich des Volumens, wenn die Kolbenstange 27 in das Dämpfergehäuse 17 eintaucht, da dann das gesamte dem magnetorheologischen Fluid 38 zur Verfügung stehende Volumen durch den eingeschobenen Anteil der Kolbenstange 27 verringert wird.

In Fig. 3 ist eine vergrößerte Darstellung des Details A aus Fig. 1 abgebildet.

Deutlich erkennbar sind die Strömungskanäle 4 und 5, mit denen die Strömungsverbindung 6 zwischen der ersten Dämpferkammer 2 bzw. dem ersten Zugang 2a und der zweiten Dämpferkammer 3 bzw. dem zweiten Zugang 3a zur Verfügung gestellt wird.

Das hier als Dämpferkolben 18 ausgeführte Ventil 20 weist zentral in der Mitte den Kern 28 aus hartmagnetischem Material auf, der ringsum von einer elektrischen Spule 13 umgeben ist.

An den Stirnseiten des Kerns 28 sind die Strömungskanäle 4 und 5 vorgesehen. Radial wird der Kern 28 schließlich von einem Ringleiter 29 umgeben, der aus einem magnetisch leitenden Material besteht. Vorzugsweise besteht der Ringleiter 29 aus einem weichmagnetischen Material. Gegebenenfalls kann er wenigstens teilweise auch aus einem hartmagnetischen Material bestehen.

Durch den Ringleiter 29 wird das magnetische Feld der Magneteinrichtung 10 mit dem hartmagnetischen Kern 28 geschlossen. Dabei verlaufen die Feldlinien des magnetischen Feldes quer zu den Strömungskanälen 4 und 5, sodass eine maximale Wirkung auf das magnetorheologische Fluid 38 erzielbar ist.

Die Zeichnung zeigt eine Ausführungsvariante, bei der die Strömungskanäle 4 und 5 und der Ringleiter 29 über die ganze Kolbenlänge gehen, der Kern 28 aber nur ungefähr halb so lang ist. Der Kraftbereich des Dämpfers kann über die Länge der Strömungskanäle 4 und 5 und über die Stärke des Magnetfeldes eingestellt werden.

In der dargestellten Ausführung konzentriert sich das Feld des Kerns 28 auf einen Teil der Strömungskanäle 4 und 5. Über andere Kernformen lassen sich andere Kraftbereiche und Dämpferkennlinien einstellen.

Außerdem wird ein Ventil dargestellt, das beim ausfahrenden Dämpfer einen Teil der Kanäle 4 und 5 bedarfsweise verschließt und so eine Unterscheidung von Zug- und Druckstufe des Dämpfers ermöglicht. Über eine Zwischenwand 33 können die Kanäle 4 bzw. 5 jeweils in Teilkanäle 34 und 35 aufgeteilt werden, wodurch die Wirksamkeit noch erhöht wird (vgl. auch Fig. 5 und die dortige Beschreibung). Als Ventil kann beispielsweise ein Shim nach dem Stand der Technik verwendet werden, das eine geringe Federkraft aufweist.

Über separate Shims oder auch über ganz einfache Einwegventile kann eine separate Dämpfung in der Zug- und in der Druckstufe erfolgen. Beispielsweise kann ein Kanal 4 nur für die Dämpfung in der Zugstufe und es kann ein Kanal 5 nur für die Dämpfung in der Druckstufe vorgesehen sein (oder umgekehrt). Einwegventile an den Kanälen 4 und 5 verhindern dabei vorzugsweise den Durchfluss der entsprechenden Kanäle in der jeweils anderen Dämpfungsstufe. Möglich ist es auch, zwei unterschiedliche Ventile 20 vorzusehen, von denen ein Ventil 20 wenigstens einen Kanal für die Dämpfung in der Zugstufe und ein Ventil 20 wenigstens einen Kanal für die Dämpfung in der Druckstufe aufweist. Darüber ist eine einfache und separate Steuerung der Dämpfungseigenschaften in der Zug- und Druckstufe möglich.

In Fig. 4 ist eine leicht perspektivische und geschnittene Darstellung des Ventils 20 dargestellt, wobei in dem Kern 28 die Verbindungsachse 31 von Nordpol und Südpol des Kerns 28 angedeutet ist. Zur Abdichtung und zur Lenkung des magnetischen Feldes des Kerns 28 sind in den seitlichen Bereichen magnetische Isolatoren 32 vorgesehen, sodass das durch den Kern 28 erzeugte magnetische Feld nicht seitlich abgelenkt wird, sondern im Wesentlichen senkrecht durch die Strömungskanäle 4 und 5 durchtritt. Die Strömungskanäle 4 und 5 laufen hier etwa parallel zu der Längsachse 30 des Dämpferkolbens 20. In anderen Ausgestaltungen können die Strömungskanäle 4 und 5 auch auf der Außenseite 19 des Dämpferkolbens 20 vorgesehen sein.

Schematisch eingezeichnet ist in Fig. 4 eine Sensoreinrichtung 16, die einen oder mehrere Sensoren umfassen kann. Bevorzugt ist ein Sensor zur Detektion der Stärke des magnetischen Feldes vorgesehen, um ein Maß für die Stärke des von dem Kern 28 erzeugten magnetischen Feldes in den Strömungskanälen 4 und 5 zu bestimmen. Als weitere Sensoren sind Temperatursensoren, Viskositätssensoren, Drucksensoren und dergleichen möglich. Die Sensoreinrichtung 16 ist mit der Steuereinrichtung 14 zur Steuerung der magnetischen Impulse, die über die Leitungen 21 ausgegeben werden, verbunden.

Die für einen magnetischen Impuls benötigte elektrische Energie wird durch eine Kondensatoreinrichtung 15 zur Verfügung gestellt, die über einen oder mehrere Kondensatoren verfügt. Über eine Kondensatoreinrichtung 15 ist es möglich, auch bei einer Stromversorgung, die nur über eine geringe Spannung und eine geringe Leistung verfügt, die benötigte Energie für einen magnetischen Impuls zur Verfügung zu stellen, um eine Magnetisierung oder Entmagnetisierung des Kerns 28 zu erzielen.

Eine Schwingkreiseinrichtung 37 kann vorgesehen sein, um eine definierte Entmagnetisierung des Kerns 28 zu gewährleisten. Dabei wird ein schwächer werdendes magnetisches Wechselfeld an den Kern 28 angelegt, womit eine Entmagnetisierung erreicht wird.

Fig. 5 zeigt einen Querschnitt durch die Dämpfereinrichtung 1 mit dem Ventil 20, wobei zur Übersichtlichkeit eine Feldlinie 36 des von dem Kern 28 erzeugten Magnetfeldes eingezeichnet ist.

Klar erkennbar ist, dass in dem Bereich der Strömungskanäle 4 und 5 die Feldlinien 36 nahezu senkrecht (normal zu den Polflächen) durch den Spalt hindurchtreten. Dadurch wird eine Verkettung der magnetorheologischen Partikel entlang der Feldlinien 36 bewirkt, wodurch in Strömungsrichtung der Strömungskanäle 4 und 5 eine maximale Dämpfung erzielt wird.

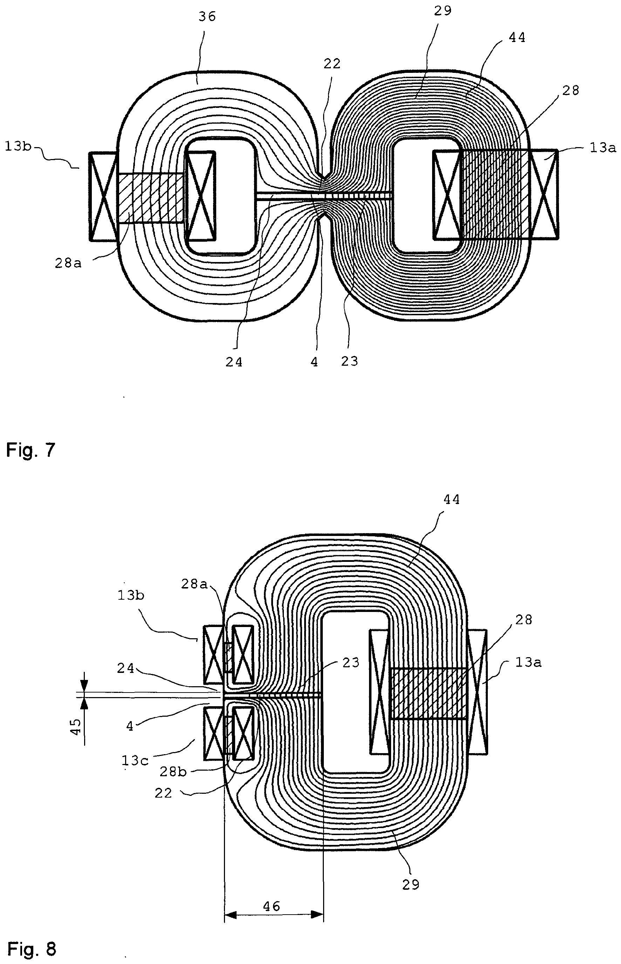

Der zentrale Kern 28 besteht hier aus Alnico als einem hartmagnetischen Material und weist eine Polarisierung von Nordpol in Richtung des Südpols entlang der Verbindungsachse 31 auf. In Richtung der Enden der Verbindungsachse 31 sind Strömungskanäle 4 und 5 vorgesehen, die hier spaltartig ausgebildet sind und durch Zwischenwände bzw. Fächerelemente 33 in Richtung der Spaltbreite 45 (vgl. Fig. 8) nochmals unterteilt sind, sodass Teilkanäle 34 und 35 an den Strömungskanälen 4 und 5 entstehen.

Die Zwischenwand 33 besteht vorzugsweise aus einem guten magnetischen Leiter, sodass die Zwischenwand nur einen geringen magnetischen Widerstand darstellt. Gegebenenfalls können die Zwischenwände 33 auch aus hartmagnetischem Material bestehen, welche durch die magnetischen Impulse der Spule 13 dauerhaft aber wieder veränderbar magnetisiert werden.

Auf den beiden Seiten des Kerns 28 ist in der Darstellung gemäß Fig. 5 die Spule 13 erkennbar, die den Kern 28 vollständig umgibt. Zusätzlich sind an den Seiten noch magnetische Isolatoren 32 vorgesehen, die in diesen Bereichen die Stärke des dort vorhandenen Magnetfeldes stark reduzieren, da die Magnetfeldlinien dem geringsten Widerstand folgen und sich durch den Kern 28 und den Ringleiter 29 erstrecken.

In bevorzugten Ausgestaltungen können die Querschnittsflächen 25 der Strömungskanäle 4 und 5 beispielsweise durch eine mechanische Verstellung einstellbar sein, sodass die Querschnittsfläche 25 entsprechend anpassbar ist.

Das Ventil 20 wird hier durch den Ringleiter 29, den darin aufgenommenen Kern 28, die Spule 13 und die magnetischen Isolatoren 32, sowie die Strömungskanäle 4 und 5 gebildet.

Im hier dargestellten Ausführungsbeispiel ist das Ventil 20 als Dämpferkolben 8 in dem Dämpfergehäuse 17 längsverschieblich angeordnet.

Vorteilhaft ist, nur den Anteil der Magneteinrichtung 10 aus Alnico zu fertigen, der notwendig ist um eine bestimmte Feldstärke und Flussdichte im restlichen Teil der Magneteinrichtung 10 aufrecht erhalten zu können. Beispielsweise kann nur ein Teil des Kerns 28 aus Alnico sein und der Rest aus einem anderen ferromagnetischen Material bestehen.

Denkbar ist auch, die gesamte Magneteinrichtung 10 aus einem Material mit hartmagnetischen Eigenschaften zu fertigen. Werden beispielsweise in Fig. 5 der Kern 28 und der Ringleiter 29 großteils aus hartmagnetischem Material gefertigt, kann dessen Koerzitivfeldstärke kleiner sein als wenn nur ein Teil des Kerns 28 aus hartmagnetischem Material besteht.

Fig. 6 zeigt die Funktionsweise bei der Veränderung oder Einstellung einer gewünschten Magnetfeldstärke 9, von einer ersten Magnetfeldstärke 9a auf eine zweite Magnetfeldstärke 9b. Dargestellt ist über der Zeit die Stärke des Magnetfeldes 9 und dabei ist die Feldstärke des Kerns 28 gepunktet dargestellt, während das von der elektrischen Spule 13 erzeugte magnetische Feld durchgezogen eingezeichnet ist.

Klar erkennbar ist, dass die von der elektrischen Spule 13 erzeugte Magnetfeldstärke 7 über den größten Teil der Zeit Null ist, da ein von der elektrischen Spule 13 erzeugtes Magnetfeld nicht für den normalen Betrieb nötig ist und somit dort keine elektrische Energie benötigt wird.

Ein von der elektrischen Spule 13 erzeugtes Magnetfeld 7 wird nur benötigt, wenn eine Veränderung der Magnetfeldstärke der Magneteinrichtung 10 angestrebt wird.

So liegt die von der Magneteinrichtung 10 erzeugte magnetische Feldstärke 16 zunächst bei einem geringeren Wert, bis ein magnetischer Impuls 11 durch die elektrische Spule 13 ausgelöst wird, wobei die von der elektrischen Spule 13 erzeugte Magnetfeldstärke 7 eine entsprechende Stärke aufweist, um den hartmagnetischen Kern 28 dauerhaft mit einer entsprechenden Stärke zu magnetisieren.

Beispielsweise kann die magnetische Feldstärke des Magneten 10 von einer zunächst geringeren Feldstärke 9a auf eine entsprechend höhere Feldstärke 9b erhöht werden, um eine stärkere Dämpfung zu bewirken bzw. um das Ventil 20 zu schließen.

Während die Impulslänge 12 für den magnetischen Impuls 11 nur sehr kurz ist und im Bereich von einigen Millisekunden liegen kann, weist der Magnet bzw. die Magneteinrichtung 10 anschließend dauerhaft die hohe magnetische Feldstärke 9b auf, die bei einer entsprechenden Magnetfeldstärke 7 des magnetischen Impulses 11 auch bis in die Sättigung des verwendeten hartmagnetischen Materials reichen kann. Die von der Spule 13 während des magnetischen Impulses 11 erzeugte Magnetfeldstärke 7 bewirkt eine dauerhafte Änderung der magnetischen Feldstärke des Magneten 10 von zunächst einer magnetische Feldstärke 9a zu einer magnetischen Feldstärke 9b.

Aus Fig. 6 ist ersichtlich, dass die Energieeinsparung gegenüber einem herkömmlichen System, das dauernd Strom benötigt, von der Häufigkeit der Ummagnetisierungen abhängt. Doch auch bei häufigem Ummagnetisieren, beispielsweise im Sekundentakt, liegt der Strombedarf geringer als bei einem vergleichbaren Dämpfer nach dem Stand der Technik. Wird die Ummagnetisierung nur bei Bedarf, also beispielsweise bei einem Wechsel der Fahrbahnbeschaffenheit, betätigt, dann tritt der Vorteil gegenüber anderen Systemen noch erheblich deutlicher zu Tage.

Bei einer entsprechend geringeren Magnetisierung des Kerns 28 wird ein entsprechend geringes magnetisches Feld 9 erzeugt. Eine Entmagnetisierung kann - wie bereits beschrieben - durch ein schwächer werdendes magnetisches Wechselfeld erzeugt werden.

Weiterhin zeigt Fig. 6 im rechten Teil des Diagramms schematisch noch eine Situation, bei der die Spule 13 auch zur zeitlichen Modifikation des wirksamen Magnetfeldes 9c verwendet wird. Wird die Spule 13 nur mit einem geringen und z.B. zeitlich variablen Magnetfeld 7a beaufschlagt, welches in Fig. 6 im rechten Teil durchgezogen eingezeichnet ist, so wird das insgesamt wirksame Magnetfeld 9c dementsprechend beeinflusst und je nach Polarisation verstärkt oder geschwächt. Damit ist auch eine dynamische Beeinflussung des wirkenden magnetischen Feldes 9c möglich, ohne die dauerhafte Magnetisierung der Magneteinrichtung 7 (Feldstärke 9b) zu ändern.

In den Fig. 7 und 8 sind weitere schematische Ausführungsbeispiele dargestellt, wobei zwei elektrische Spulen 13a und 13b (Fig. 7) bzw. drei elektrische Spulen 13a, 13b und 13c in Verbindung mit entsprechenden Kernen 28, 28a bzw. 28, 28a und 28b eingesetzt werden.

In Fig. 7 ist ein zentraler Strömungskanal 4 vorgesehen, wobei auf beiden Seiten C-förmige Elemente vorgesehen sind, die insgesamt den Ringleiter 29 erzeugen. Dabei kann die rechte und die linke Hälfte zunächst getrennt betrachtet werden. Das in der rechten Hälfte von dem Kern 28 erzeugte Magnetfeld wird durch den Ringleiter 29 bis zu dem Strömungskanal 4 gelenkt, der hier spaltartig ausgebildet ist.

In dem Strömungskanal 4 ist ein magnetorheologisches Fluid 38 vorgesehen, welches hier in dem Bereich der rechten Hälfte durch den Kern 28 einem starken magnetischen Feld ausgesetzt ist. Dadurch wird auf der rechten Hälfte ein Sperrabschnitt 23 erzeugt, der die Strömung dort maximal dämpft.

Die linke Hälfte des Strömungskanals 4 wird im Wesentlichen durch das magnetische Feld des zweiten Kerns 28a beeinflusst. Hier im Ausführungsbeispiel wird vom Kern 28a ein schwaches Feld erzeugt, das dem Feld vom Kern 28 entgegengesetzt gepolt ist, wie sich an der Dichte der Feldlinien 36 des Magnetfeldes 44 auch grafisch klar erkennbar ergibt. Dadurch wird ein Teil des Feldes vom Kern 28 über den Kern 28a kurzgeschlossen, im linken Bereich des Strömungskanals 4 ist kein Feld. In der Mitte des Strömungskanals 4 bildet sich der Übergangsabschnitt 22 aus, in dem die Feldstärke nach rechts, in Richtung des Kerns 28, zunimmt.

Durch eine Veränderung der Magnetfelder über magnetische Impulse 11 der elektrischen Spule 13a und 13b können die durch die Kerne 28 und 28a erzeugten Magnetfelder entsprechend beeinflusst werden, sodass es möglich ist, den kompletten Strömungskanal 4 als Sperrabschnitt 22 auszubilden, oder aber den kompletten Strömungskanal 4 als Durchlass-Abschnitt 24 auszubilden.

Wenn eine entsprechende Steuerung die Stärke und Polarisierung der Magnetisierung der Kerne 28 und 28a unterschiedlich einstellt, kann auch ein breiter Übergangsabschnitt 22 eingestellt werden, der zu einem weichen Übergang von Low-Speed- zum High-Speed-Bereich führt. Der Feldverlauf im Strömungskanal 4 kann in einem weiten Einstellbereich verstellt werden. Die durch mindestens einen Impuls erfolgte Einstellung wird auf Dauer ohne elektrische Versorgung beibehalten.

Ein beliebiger Teil der Kerne 28 und 28a oder des Ringleiters 29 kann aus hartmagnetischem Material gefertigt werden, der von den Spulen 13a und 13b umwickelte Bereich eignet sich am besten, da dort besonders hohe und homogene Felder erzielt werden können.

In Fig. 8 ist eine schematische Lösung mit drei Kernen 28, 28a und 28b mit zugehörigen elektrischen Spulen 13a, 13b und 13c dargestellt, wobei sich durch eine unterschiedliche Einstellung der jeweiligen Magnetisierung unterschiedlichste Bedingungen für den Strömungskanal ergeben.

Die Summe der einzelnen Felder der Kerne 28, 28a und 28b ergeben ein Gesamtfeld, das den Strömungskanal 4 durchflutet. Die Form des Feldes beeinflusst dabei wie bei Fig. 7 beschrieben die Dämpferkennlinie 65. Der Kern 28 ist der Hauptkern, er bestimmt die Stärke des Feldes der Magneteinrichtung 10. Die Kerne 28a und 28b können das Feld der Magneteinrichtung im Strömungskanal 4 beeinflussen.

Sind die Kerne 28a und 28b gleich polarisiert wie der Hauptkern 28, dann herrscht im Strömungskanal 4 ein homogenes Magnetfeld 44, dessen Stärke von der Magnetisierung aller Kerne abhängt. Sind die Kerne 28a und 28b umgekehrt gepolt wie der Hauptkern 28, dann kann sich im Strömungskanal 4 ein inhomogenes Magnetfeld ausbilden. Verschiedene Abschnitte wie Durchlassabschnitt 24, Übergangsabschnitt 22 und Sperrabschnitt 23 können so gebildet werden. Die Form der Abschnitte hängt von der Magnetisierung der einzelnen Kerne ab und kann über einen weiten Bereich eingestellt werden. Denkbar ist auch, die beiden Kerne 28a und 28b gegensinnig zu polen (wobei dann einer wieder gleich gepolt ist wie der Hauptkern 28). Der Einstellbereich des Dämpfers 1 kann dadurch weiter vergrößert werden.

Im Gegensatz zu Fig. 7 muss das hartmagnetische Material im Bereich der Spulen 13a, 13b und 13c angeordnet sein um im stromlosen Zustand ein bestimmtes Feld im Strömungskanal 4 erzeugen zu können. Alternativ kann allenfalls der Ringleiter 29 im direkt an den Strömungskanal angrenzenden Teilbereich hartmagnetische Eigenschaften aufweisen.

Auch hier ist die Spaltbreite 45 des Strömungskanals 4 erheblich geringer als die Spaltlänge 46, wobei das Verhältnis von Spaltlänge 46 zu Spaltbreite 45 den Faktor 2 übersteigt und insbesondere größer 5 oder sogar größer als 10 ist.

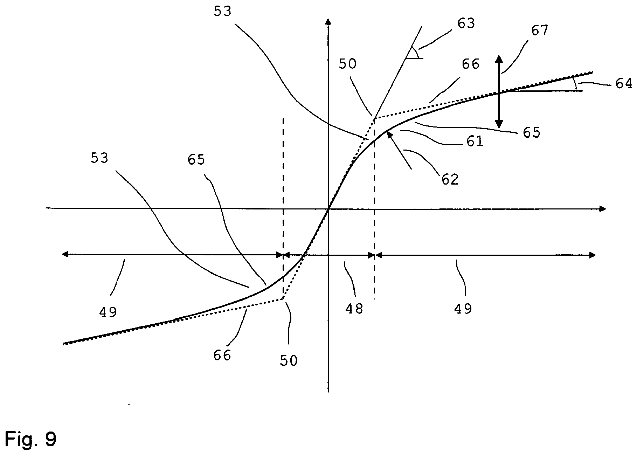

Eine Dämpferkennlinie 65 der Dämpfereinrichtung 1 mit dem Ventil 20 ist in Fig. 9 in einem Kraft-Geschwindigkeitsdiagramm des Dämpferkolbens dargestellt. Der Low-Speed-Bereich 48 und der High-Speed-Bereich 49 sind über eine sanfte Abrundung 61 mit einem Radius 62 verbunden. Die Kennlinie nach Fig. 9 ist symmetrisch aufgebaut und zeigt den gleichen Verlauf für die Zug- und Druckstufe. Ein unterschiedlicher Verlauf der beiden Stufen ist aber grundsätzlich möglich und erwünscht.

Im Low-Speed-Bereich 48 wird die Steigung 63 der Dämpferkennlinie im Wesentlichen durch den Bypass-Abschnitt bzw. Durchlassabschnitt 24 bestimmt. Im High-Speed-Bereich 49 wird die Steigung 64 wesentlich durch den gesamten Strömungskanal 4 und 5 sowie die Stärke des Feldes im Sperrabschnitt 23 bestimmt.

Im Übergangsabschnitt 22, in welchem über seiner Ausdehnung ein schwächer werdendes Magnetfeld wirkt, führt die vorteilhafte nichtlineare Ausprägung zu der Abrundung 61, die zu einer angenehmen und sicheren Betriebsweise führt.

Eingezeichnet ist weiterhin ein Pfeil 67, der die Auswirkung eines unterschiedlich starken Magnetfeldes anzeigt. Mit einem stärkeren Magnetfeld und insbesondere einer stärkeren Magnetisierung des Kerns 28 verschiebt sich die Kennlinie nach oben, während sie sich bei einem schwächeren Magnetfeld und insbesondere einer schwächeren Magnetisierung nach unten verschiebt.

Punktiert eingezeichnet ist eine Dämpferkennlinie 66, die ohne Übergangsabschnitt 22 vorliegen würde, wenn neben dem magnetorheologischen Strömungskanal 4 bzw. 5 noch ein zusätzlicher Bypass- bzw. Durchlasskanal vorgesehen wäre. An dem Knickpunkt 50 würde bei einem solchen Dämpfer der Widerstand im Strömungskanal 4 und 5 überwunden und sich die Dämpfung schlagartig ändern, was zu unerwünschten Fahreigenschaften bei Einsatz in einem Fahrrad führen könnte. Die Steigung im Low-Speed-Bereich 48 ist durch den Anteil des Durchlass-Abschnitts 24 einstellbar. Je größer der Durchlass-Abschnitt 24, desto kleiner die Steigung. Auch der Nulldurchgang wird durch den Durchlass-Abschnitt 24 erzeugt, da durch den Durchlass-Abschnitt 24 jederzeit Dämpfungsfluid unbeeinflusst fließen kann, sodass schon bei kleinen Kräften eine entsprechende Dämpferkolbenbewegung ausgelöst wird.

Die Steigung im High-Speed-Bereich 49 wird durch die Form des gesamten Strömungskanals 4 und 5 und die eingestellte Stärke des magnetischen Feldes 9 im Sperrabschnitt 23 beeinflusst.

Der für den Komfort und die Sicherheit wichtige Bereich mit der Abrundung 61 wird durch den Übergangsabschnitt 22 des Strömungskanals 4 bzw. 5 abgerundet, sodass eine ergonomische und sichere Betriebsweise ermöglicht wird. Die Größe des abgerundeten Bereichs ergibt sich aus der Größe und Gestalt des Übergangsabschnitts 22, der durch eine entsprechende Einstellung der Stärke der Magnetfelder der Kerne 28, 28a, 28b (und gegebenenfalls noch mehr Kerne) flexibel einstellbar ist. Die Stromversorgung durch einen Generator, Dynamo oder insbesondere auch einen Nabendynamo ist auch möglich.

### Bezugszeichenliste:

- 1: Dämpfereinrichtung
- 2, 3: Dämpferkammer
- 2a, 3a: erster bzw. zweiter Zugang
- 4, 5: Strömungskanal
- 6: Strömungsverbindung
- 7, 7a: Magnetfeldstärke der Magnetfelderzeugungseinrichtung
- 8: Magnetfelderzeugungseinrichtung
- 9, 9a, 9b: Magnetfeldstärke der Magneteinrichtung
- 9c: wirksame Magnetfeldstärke
- 10: Magneteinrichtung, Magnet
- 11: magnetischer Impuls
- 12: Impulslänge
- 13, 13a, 13b, 13c: elektrische Spule
- 14: Steuereinrichtung
- 15: Kondensatoreinrichtung
- 16: Sensoreinrichtung
- 17: Dämpfergehäuse
- 18: Dämpferkolben
- 19: Außenseite
- 20: Ventil
- 21: Steuer- und Energieleitungen
- 22: Übergangsabschnitt
- 23: Sperrabschnitt
- 24: Durchlass-Abschnitt
- 25: Querschnittsfläche
- 26: Federeinrichtung
- 27: Kolbenstange
- 28, 28a, 28b: Kern
- 29: Ringleiter
- 30: Längsachse
- 31: Verbindungsachse
- 32: Isolator
- 33: Zwischenwand, Fächerelement
- 34, 35: Teilkanal
- 36: Magnetfeldlinie
- 37: Schwingkreiseinrichtung
- 38: magnetorheologisches Fluid
- 39: erstes Ende
- 40: zweites Ende
- 41, 42: Federkammer
- 44: Magnetfeld
- 45: Spaltbreite
- 46: Spaltlänge
- 47: Gaskolben
- 48: Low-Speed-Bereich
- 49: High-Speed-Bereich
- 50: Knickpunkt
- 54: Ausgleichsfeder
- 55: Trennkolben
- 61: Abrundung
- 62: Radius
- 63, 64: Steigung
- 65: Dämpferkennlinie
- 66: Steigung im High-Speed-Bereich
- 67: Bereich der Dämpferkennlinie

## Patentansprüche

1. Dämpfereinrichtung (1) für ein Zweirad und insbesondere ein Fahrrad mit wenigstens einer ersten Dämpferkammer (2) und wenigstens einer zweiten Dämpferkammer (3), welche über wenigstens einen Strömungskanal (4, 5) miteinander gekoppelt sind, welcher mit wenigstens einem magnetorheologischen Fluid (38) versehen ist,
wobei wenigstens eine Magneteinrichtung (10) vorgesehen ist, um den Strömungskanal (4, 5) wenigstens teilweise einem Magnetfeld (6) aussetzen zu können,
**dadurch gekennzeichnet,**
**dass** mindestens eine Magnetfelderzeugungseinrichtung (8) vorgesehen ist, mit welcher durch wenigstens einen magnetischen Impuls (11) eine dauerhafte Änderung der Magnetfeldstärke (9a, 9b) der Magneteinrichtung (10) erzielbar ist, wobei die Magneteinrichtung (10) wenigstens teilweise aus einem Material besteht, welches eine Koerzitivfeldstärke in einem Bereich zwischen 10 kA/m und 200 kA/m aufweist,
und **dass** wenigstens eine Sensoreinrichtung (16) vorgesehen ist.

2. Dämpfereinrichtung (1) nach Anspruch 1, wobei die dauerhafte Magnetisierung der Magneteinrichtung (10) durch mindestens einen magnetischen Impuls (11) der Magnetfelderzeugungseinrichtung (8) auf einen beliebigen Wert zwischen Null und der Remanenz einstellbar ist, wobei insbesondere die Polarität der Magnetisierung veränderbar ist.

3. Dämpfereinrichtung (1) nach Anspruch 1 oder 2, wobei eine Steuereinrichtung (14) vorgesehen ist, um magnetische Impulse (11) der Magnetfelderzeugungseinrichtung (8) gesteuert auszugeben, wobei die Magnetfelderzeugungseinrichtung (8) wenigstens eine elektrische Spule (13) umfasst.

4. Dämpfereinrichtung (1) nach Anspruch 1 bis 3, wobei mit der Magneteinrichtung (10) ein statisches Magnetfeld erzeugbar ist, das mit einem dynamischen Magnetfeld der Magnetfelderzeugungseinrichtung (8) überlagerbar ist, ohne das statische Magnetfeld dadurch zu ändern.

5. Dämpfereinrichtung (1) nach mindestens einem der vorhergehenden Ansprüche, wobei wenigstens eine Kondensatoreinrichtung (15) vorgesehen ist, um die elektrische Energie zur Erzeugung wenigstens eines magnetischen Impulses (11) zur Verfügung zu stellen.

6. Dämpfereinrichtung (1) nach mindestens einem der vorhergehenden Ansprüche, wobei die Magneteinrichtung (10) wenigstens teilweise aus einem solchen Material besteht und derart strukturiert ist, dass in dem Strömungskanal (4, 5) eine magnetische Flussdichte von wenigstens 0,3 Tesla und insbesondere wenigstens 0,5 Tesla erzeugbar ist, wobei die Magneteinrichtung (10) insbesondere wenigstens teilweise aus einem Material besteht, welches eine Koerzitivfeldstärke größer als 10 kA/m aufweist und wobei die Magneteinrichtung (10) wenigstens teilweise aus einem Material besteht, welches eine Koerzitivfeldstärke kleiner als 200 kA/m aufweist, wobei insbesondere die Magneteinrichtung (10) wenigstens teilweise aus einem Material besteht, welches einer Gruppe von Materialien entnommen ist, welche Alnico, CuNiFe, FeCrCo, FeCoVCr, SmCo, NdFeB, FeCr, FeCoVCr, Neodym und Material mit vergleichbaren magnetischen Eigenschaften enthält.

7. Dämpfereinrichtung (1) nach mindestens einem der vorhergehenden Ansprüche, wobei der Strömungskanal (4, 5) einem inhomogenen Magnetfeld (21) aussetzbar ist und wobei insbesondere der Strömungskanal (4,5) wenigstens einen Übergangsabschnitt (22) und wenigstens einen Sperrabschnitt (23) und/oder wenigstens einen Durchlass-Abschnitt (24) umfasst, wobei insbesondere eine Querschnittsfläche (25) des Strömungskanals (4, 5) einstellbar ist und/oder wobei wenigstens ein Anteil des Übergangsabschnitt (22) und/oder des Durchlass-Abschnitts (24) an der Querschnittsfläche des Strömungskanals (4, 5) einstellbar ist.

8. Dämpfereinrichtung (1) nach mindestens einem der vorhergehenden Ansprüche, wobei wenigstens ein Teil der Magneteinrichtung (10) relativ zu dem Strömungskanal (4, 5) bewegbar ist.

9. Dämpfereinrichtung (1) nach mindestens einem der vorhergehenden Ansprüche, wobei wenigstens ein Teil der Magneteinrichtung (10) benachbart zu der Spule (13) angeordnet oder von der Spule (13) umgeben ist und/oder wobei wenigstens ein Strömungskanal (4, 5) benachbart zu dem Kern (28) angeordnet ist.

10. Dämpfereinrichtung (1) nach mindestens einem der vorhergehenden Ansprüche, wobei der Kern (28), die Spule (13) und der wenigstens eine Strömungskanal (4, 5) von einem magnetisch leitenden Ringleiter (29) umgeben sind und/oder wobei der Strömungskanal (4, 5) an den Kern (28), den Ringleiter (29) und wenigstens einen seitlichen magnetischen Isolator (32) angrenzt.

11. Dämpfereinrichtung (1) nach mindestens einem der vorhergehenden Ansprüche, wobei wenigstens zwei Spulen (13, 13a, 13b) vorgesehen sind, die insbesondere separat ansteuerbar sind.

12. Dämpfereinrichtung (1) nach mindestens einem der vorhergehenden Ansprüche, wobei eine Schwingkreiseinrichtung (37) vorgesehen ist, um ein sich abschwächendes magnetisches Wechselfeld zu erzeugen.

13. Dämpfereinrichtung (1) nach mindestens einem der vorhergehenden Ansprüche, wobei die erste Dämpferkammer (2) und die zweite Dämpferkammer (3) wenigstens teilweise in einem gemeinsamen Dämpfergehäuse (17) angeordnet und durch wenigstens einen Dämpferkolben (18) voneinander getrennt sind, wobei der Dämpferkolben (18) insbesondere einen Kern (28) aufweist, der wenigstens einen Teil der Magneteinrichtung (10) enthält.

14. Verfahren zum Betreiben einer Dämpfereinrichtung (1), unter Verwendung einer Dämpfereinrichtung (1) nach mindestens einem der vorhergehenden Ansprüche, wobei über magnetische Impulse einer Magnetfelderzeugungseinrichtung die Magnetfeldstärke der Remanenzeinrichtung der Magneteinrichtung (10) dauerhaft verändert wird.

## Claims

1. Damper device (1) for a two-wheeled vehicle and in particular a bicycle having at least one first damper chamber (2) and at least one second damper chamber (3) coupled to one another through at least one flow duct (4, 5) provided with at least one magnetorheological fluid (38),
wherein at least one magnetic device (10) is provided to allow exposing at least part of the flow duct (4, 5) to a magnetic field (6),
**characterized in**
**that** at least one magnetic field-generating device (8) is provided with which, by means of at least one magnetic pulse (11), a permanent change of the magnetic field strength (9a, 9b) of the magnetic device (10) can be achieved, wherein the magnetic device (10) consists at least in part of a material having a coercitive field strength in a range between 10 kA/m and 200 kA/m,
and **that** at least one sensor device (16) is provided.

2. The damper device (1) according to claim 1, wherein the permanent magnetization of the magnetic device (10) can be set by at least one magnetic pulse (11) of the magnetic field-generating device (8) to any desired value between zero and the remanence, wherein the polarity of the magnetization can in particular be changed.

3. The damper device (1) according to claim 1 or 2, wherein a control device (14) is provided for controlled emission of magnetic pulses (11) of the magnetic field-generating device (8), wherein the magnetic field-generating device (8) comprises at least one electric coil (13).

4. The damper device (1) according to claims 1 to 3, wherein the magnetic device (10) can generate a static magnetic field which can be superimposed by a dynamic magnetic field of the magnetic field-generating device (8) without thereby changing the static magnetic field.

5. The damper device (1) according to at least one of the preceding claims, wherein at least one capacitor device (15) is provided to provide the electric energy for generating at least one magnetic pulse (11).

6. The damper device (1) according to at least one of the preceding claims, wherein the magnetic device (10) consists at least in part of a material and is structured such that in the flow duct (4, 5) a magnetic flux density of at least 0.3 tesla and in particular at least 0.5 tesla can be generated, wherein the magnetic device (10) consists in particular at least in part of a material having a coercitive field strength of higher than 10 kA/m, and
wherein the magnetic device (10) consists at least in part of a material having a coercitive field strength of less than 200 kA/m, wherein in particular the magnetic device (10) consists at least in part of a material taken from a group of materials comprising, alnico, CuNiFe, FeCrCo, FeCoVCr, SmCo, NdFeB, FeCr, FeCoVCr, neodymium, and materials having similar magnetic properties.

7. The damper device (1) according to at least one of the preceding claims, wherein the flow duct (4, 5) can be exposed to an inhomogeneous magnetic field (21), and wherein in particular the flow duct (4, 5) comprises at least one transition section (22) and at least one blocking section (23) and/or at least one passage section (24), wherein in particular a cross-sectional area (25) of the flow duct (4, 5) is adjustable, and/or wherein at least a portion of the transition section (22) and/or of the passage section (24) is adjustable at the cross-sectional area of the flow duct (4, 5).

8. The damper device (1) according to at least one of the preceding claims, wherein at least part of the magnetic device (10) is movable relative to the flow duct (4, 5).

9. The damper device (1) according to at least one of the preceding claims, wherein at least part of the magnetic device (10) is disposed adjacent to the coil (13) or is enveloped by the coil (13), and/or wherein at least one flow duct (4, 5) is disposed adjacent to the core (28).

10. The damper device (1) according to at least one of the preceding claims, wherein the core (28), the coil (13) and the at least one flow duct (4, 5) are enveloped by a magnetically conductive ring conductor (29), and/or wherein the flow duct (4, 5) abuts the core (28), the ring conductor (29) and at least one lateral magnetic isolator (32).

11. The damper device (1) according to at least one of the preceding claims, wherein at least two coils (13, 13a, 13b) are provided which can be in particular selected separately.

12. The damper device (1) according to at least one of the preceding claims, wherein an oscillator circuit device (37) is provided to generate an attenuating alternating magnetic field.

13. The damper device (1) according to at least one of the preceding claims, wherein the first damper chamber (2) and the second damper chamber (3) are disposed at least in part in a shared damper housing (17) and are separated from one another by at least one damper piston (18), which damper piston (18) in particular comprises a core (28) comprising at least part of the magnetic device (10).

14. Method of operating a damper device (1), using a damper device (1) according to at least one of the preceding claims, wherein by means of magnetic pulses of a magnetic field-generating device the magnetic field strength of the remanence device of the magnetic device (10) is permanently changed.

## Revendications

1. Dispositif d'amortissement (1) pour un deux-roues et en particulier une bicyclette ayant au moins une première chambre d'amortissement (2) et au moins une deuxième chambre d'amortissement (3) qui sont couplées l'une à l'autre via au moins un canal d'écoulement (4, 5) qui est muni d'au moins un fluide magnétorhéologique (38),
dans lequel au moins un dispositif magnétique (10) est prévu pour pouvoir exposer le canal d'écoulement (4, 5) au moins en partie à un champ magnétique (6),
**caractérisé par le fait**
**qu'**au moins un dispositif de génération de champ magnétique (8) est prévu, au moyen duquel on peut obtenir un changement permanent de l'intensité de champ magnétique (9a, 9b) du dispositif magnétique (10) par au moins une impulsion magnétique (11), dans lequel le dispositif magnétique (10) est constitué, au moins en partie, d'un matériau qui présente une intensité de champ coercitif dans une plage comprise entre 10 kA/ m et 200 kA/ m, et qu'au moins un dispositif à capteur (16) est prévu.

2. Dispositif d'amortissement (1) selon la revendication 1, dans lequel l'aimantation permanente du dispositif magnétique (10) par au moins une impulsion magnétique (11) du dispositif de génération de champ magnétique (8) peut être réglée à une valeur quelconque comprise entre zéro et la rémanence, dans lequel en particulier la polarité de l'aimantation est modifiable.

3. Dispositif d'amortissement (1) selon la revendication 1 ou 2, dans lequel un dispositif de commande (14) est prévu afin de délivrer de manière commandée des impulsions magnétiques (11) du dispositif de génération de champ magnétique (8), dans lequel le dispositif de génération de champ magnétique (8) comprend au moins une bobine électrique (13).

4. Dispositif d'amortissement (1) selon la revendication 1 à 3, dans lequel le dispositif magnétique (10) permet de générer un champ magnétique statique auquel peut être superposé un champ magnétique dynamique du dispositif de génération de champ magnétique (8) sans modifier ainsi le champ magnétique statique.

5. Dispositif d'amortissement (1) selon au moins l'une quelconque des revendications précédentes, dans lequel au moins un dispositif à condensateur (15) est prévu afin de fournir l'énergie électrique pour générer au moins une impulsion magnétique (11).

6. Dispositif d'amortissement (1) selon au moins l'une quelconque des revendications précédentes, dans lequel le dispositif magnétique (10) est constitué, au moins en partie, d'un matériau tel et est structuré de telle manière qu'une densité de flux magnétique d'au moins 0,3 Tesla et en particulier d'au moins 0,5 Tesla peut être générée dans le canal d'écoulement (4, 5), dans lequel le dispositif magnétique (10) est constitué, en particulier au moins en partie, d'un matériau qui présente une intensité de champ coercitif qui est supérieure à 10 kA/m, et dans lequel le dispositif magnétique (10) est constitué, au moins en partie, d'un matériau présentant une intensité de champ coercitif qui est inférieure à 200 kA/m, dans lequel, en particulier, le dispositif magnétique (10) est constitué, au moins en partie, d'un matériau qui est pris dans un groupe de matériaux comprenant l'Alnico, le CuNiFe, le FeCrCo, le FeCoVCr, le SmCo, le NdFeB, le FeCr, le FeCoVCr, le néodyme et du matériau ayant des propriétés magnétiques comparables.

7. Dispositif d'amortissement (1) selon au moins l'une quelconque des revendications précédentes, dans lequel le canal d'écoulement (4, 5) peut être exposé à un champ magnétique non homogène (21) et dans lequel, en particulier, le canal d'écoulement (4, 5) comprend au moins une section de transition (22) et au moins une section de blocage (23) et/ou au moins une section de passage (24), dans lequel, en particulier, une aire de section transversale (25) du canal d'écoulement (4, 5) est réglable et/ou dans lequel au moins une partie de la section de transition (22) et/ou de la section de passage (24) est réglable sur l'aire de section transversale du canal d'écoulement (4, 5).

8. Dispositif d'amortissement (1) selon au moins l'une quelconque des revendications précédentes, dans lequel au moins une partie du dispositif magnétique (10) est déplaçable par rapport au canal d'écoulement (4, 5).

9. Dispositif d'amortissement (1) selon au moins l'une quelconque des revendications précédentes, dans lequel au moins une partie du dispositif magnétique (10) est agencée de manière adjacente à la bobine (13) ou est entourée par la bobine (13) et/ou dans lequel au moins un canal d'écoulement (4, 5) est agencé de manière adjacente au noyau (28).

10. Dispositif d'amortissement (1) selon au moins l'une quelconque des revendications précédentes, dans lequel le noyau (28), la bobine (13) et ledit au moins un canal d'écoulement (4, 5) sont entourés par un conducteur annulaire (29) qui est magnétiquement conducteur et/ou dans lequel le canal d'écoulement (4, 5) jouxte le noyau (28), le conducteur annulaire (29) et au moins un isolant magnétique latéral (32).

11. Dispositif d'amortissement (1) selon au moins l'une quelconque des revendications précédentes, dans lequel au moins deux bobines (13, 13a, 13b) sont prévues qui, en particulier, peuvent être commandées séparément.

12. Dispositif d'amortissement (1) selon au moins l'une quelconque des revendications précédentes, dans lequel un dispositif de circuit oscillant (37) est prévu pour générer un champ magnétique alternatif qui s'atténue.

13. Dispositif d'amortissement (1) selon au moins l'une quelconque des revendications précédentes, dans lequel la première chambre d'amortissement (2) et la deuxième chambre d'amortissement (3) sont disposées, au moins en partie, dans un boîtier amortisseur (17) commun et sont séparées l'une de l'autre par au moins un piston amortisseur (18), dans lequel ledit piston amortisseur (18) comprend en particulier un noyau (28) qui contient au moins une partie du dispositif magnétique (10).

14. Procédé destiné à faire fonctionner un dispositif d'amortissement (1) en utilisant un dispositif d'amortissement (1) selon au moins l'une quelconque des revendications précédentes, dans lequel l'intensité de champ magnétique du dispositif de rémanence du dispositif magnétique (10) est modifiée en permanence par le biais d'impulsions magnétiques d'un dispositif de génération de champ magnétique.
